# EUROPEAN PATENT APPLICATION

(11) **EP 4 815 389 A1**
(43) Date of publication of application: **30.09.2026**
(21) Application number: 23959511.9
(22) Date of filing: 20.11.2023
(51) Int. Cl.: H04L 41/14, H04L 43/08

(54) **DEVICE AND METHOD FOR PERFORMING SEMANTIC COMMUNICATION IN WIRELESS COMMUNICATION SYSTEM**

(71) Applicant: LG Electronics Inc., Yeongdeungpo-gu Seoul 07336 (KR)
(72) Inventor: LEE, Taehyun, Seoul 06772 (KR); LEE, Sangrim, Seoul 06772 (KR); JUNG, Ikjoo, Seoul 06772 (KR); KWON, Soonhee, Seoul 06772 (KR)
(74) Representative: Plasseraud IP
(86) International application number: PCT/KR2023/018612
(87) International publication number: WO 2025/110254

(57) **Abstract**

The present disclosure is for performing semantic communication in a wireless communication system. A method performed by a terminal may comprise the steps of: receiving configuration information related to communication from a base station; receiving control information from the base station; receiving a data signal on the basis of the configuration information and the control information from the base station; and transmitting feedback information for the data signal to the base station.

## Description

### TECHNICAL FIELD

The following description is related to a wireless communication system, and to an apparatus and method for performing semantic communication in a wireless communication system.

### BACKGROUND ART

Radio access systems have come into widespread in order to provide various types of communication services such as voice or data. In general, a radio access system is a multiple access system capable of supporting communication with multiple users by sharing available system resources (bandwidth, transmit power, etc.). Examples of the multiple access system include a code division multiple access (CDMA) system, a frequency division multiple access (FDMA) system, a time division multiple access (TDMA) system, a single carrier-frequency division multiple access (SC-FDMA) system, etc.

In particular, as many communication apparatuses require a large communication capacity, an enhanced mobile broadband (eMBB) communication technology has been proposed compared to radio access technology (RAT). In addition, not only massive machine type communications (MTC) for providing various services anytime anywhere by connecting a plurality of apparatuses and things but also communication systems considering services/user equipments (UEs) sensitive to reliability and latency have been proposed. To this end, various technical configurations have been proposed.

### DISCLOSURE

### TECHNICAL PROBLEM

The present disclosure may provide an apparatus and method for effectively transmitting and receiving semantic information of a message in a wireless communication system.

The present disclosure may provide an apparatus and method for estimating background knowledge of a destination in a wireless communication system.

The present disclosure may provide an apparatus and method for generating and transmitting a semantic feature corresponding to source data based on a part that is most similar to background knowledge of a destination among entire background knowledge in a wireless communication system.

The present disclosure may provide an apparatus and method for dividing entire background knowledge into a plurality of partial background knowledge in a wireless communication system.

The present disclosure may provide an apparatus and method for transmitting semantic information based on a semantic diversity scheme in a wireless communication system.

The present disclosure may provide an apparatus and method for generating and transmitting semantic features corresponding to source data based on a plurality of partial background knowledge in a wireless communication system.

The present disclosure may provide an apparatus and method for calculating and feeding back attention values corresponding to received semantic features in a wireless communication system.

The present disclosure may provide an apparatus and method for estimating background knowledge of a destination based on attention values in a wireless communication system.

The present disclosure may provide an apparatus and method for fine-tuning estimated background knowledge of a destination in a wireless communication system.

The above-described aspects of the present disclosure are only some of the preferred embodiments of the present disclosure, and various embodiments reflecting the technical features of the present disclosure may be derived and understood by those skilled in the art based on the following detailed description of the present disclosure.

### TECHNICAL SOLUTION

According to an embodiment of the present disclosure, a method performed by a user equipment (UE) in a wireless communication system, the method may include: receiving, from a base station, configuration information related to communication; receiving, from the base station, control information; based on the configuration information and the control information, receiving, from the base station, a data signal; and transmitting, to the base station, feedback information for the data signal, wherein the data signal includes a plurality of semantic features generated based on a plurality of partial background knowledge derived from background knowledge information of the base station, and wherein the feedback information includes information used to estimate one that is most similar to background knowledge that the UE has, from among the plurality of partial background knowledge.

According to an embodiment of the present disclosure, a method performed by a base station in a wireless communication system, the method may include: transmitting, to a user equipment (UE), configuration information related to communication; transmitting, to the UE, control information; based on the configuration information and the control information, transmitting, to the UE, a data signal; and receiving, from the UE, feedback information for the data signal, wherein the data signal includes a plurality of semantic features generated based on a plurality of partial background knowledge derived from background knowledge information of the base station, and wherein the feedback information includes information used to estimate one that is most similar to background knowledge that the UE has, from among the plurality of partial background knowledge.

According to an embodiment of the present disclosure, a user equipment (UE) in a wireless communication system, the UE may include: a transceiver; and a processor connected to the transceiver, wherein the processor may be configured to control the UE to perform operations including: receiving, from a base station, configuration information related to communication; receiving, from the base station, control information; based on the configuration information and the control information, receiving, from the base station, a data signal; and transmitting, to the base station, feedback information for the data signal, wherein the data signal includes a plurality of semantic features generated based on a plurality of partial background knowledge derived from background knowledge information of the base station, and wherein the feedback information includes information used to estimate one that is most similar to background knowledge that the UE has, from among the plurality of partial background knowledge.

According to an embodiment of the present disclosure, a base station in a wireless communication system, the base station may include: a transceiver; and a processor connected to the transceiver, wherein the processor may be configured to control the base station to perform operations including: transmitting, to a user equipment (UE), configuration information related to communication; transmitting, to the UE, control information; based on the configuration information and the control information, transmitting, to the UE, a data signal; and receiving, from the UE, feedback information for the data signal, wherein the data signal includes a plurality of semantic features generated based on a plurality of partial background knowledge derived from background knowledge information of the base station, and wherein the feedback information includes information used to estimate one that is most similar to background knowledge that the UE has, from among the plurality of partial background knowledge.

According to an embodiment of the present disclosure, a communication device, may include: at least one processor; at least one computer memory connected to the at least one processor and storing instructions that, based on being executed by the at least one processor, cause the communication device to perform operations, wherein the operations may include: receiving, from a base station, configuration information related to communication; receiving, from the base station, control information; based on the configuration information and the control information, receiving, from the base station, a data signal; and transmitting, to the base station, feedback information for the data signal, wherein the data signal includes a plurality of semantic features generated based on a plurality of partial background knowledge derived from background knowledge information of the base station, and wherein the feedback information includes information used to estimate one that is most similar to background knowledge that the UE has, from among the plurality of partial background knowledge.

According to an embodiment of the present disclosure, a non-transitory computer-readable medium storing at least one instruction, the non-transitory computer-readable medium may include: the at least one instruction being executable by a processor, wherein the at least one instruction is configured to control a device to perform operations may include: receiving, from a base station, configuration information related to communication; receiving, from the base station, control information; based on the configuration information and the control information, receiving, from the base station, a data signal; and transmitting, to the base station, feedback information for the data signal, wherein the data signal includes a plurality of semantic features generated based on a plurality of partial background knowledge derived from background knowledge information of the base station, and wherein the feedback information includes information used to estimate one that is most similar to background knowledge that the UE has, from among the plurality of partial background knowledge.

The above-described aspects of the present disclosure are only some of the preferred embodiments of the present disclosure, and various embodiments reflecting the technical features of the present disclosure may be derived and understood by those skilled in the art based on the following detailed description of the present disclosure.

### ADVANTAGEOUS EFFECTS

According to embodiments based on the present disclosure, the following effects may be obtained.

According to the present disclosure, performance of semantic communication may be improved.

Effects obtainable in embodiments of the present disclosure are not limited to the effects mentioned above, and other effects not mentioned may be clearly derived and understood by those skilled in the art to which the technical configuration of the present disclosure is applied from the following description of embodiments of the present disclosure. For example, even unintended effects resulting from implementing the configuration described in the present disclosure may be derived by those skilled in the art from the embodiments of the present disclosure.

### BRIEF DESCRIPTION OF THE DRAWINGS

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.
FIG. 1 shows an example of a communication system applicable to the present disclosure.
FIG. 2 shows an example of a wireless device applicable to the present disclosure.
FIG. 3 shows a method for processing a transmission signal applicable to the present disclosure.
FIG. 4 shows a communication procedure between a UE and a base station applicable to the present disclosure.
FIG. 5 shows an example of a communication structure capable of being provided in a sixth generation (6G) system applicable to the present disclosure.
FIG. 6 shows an electromagnetic spectrum applicable to the present disclosure.
FIG. 7 shows a THz wireless transceiver applicable to the present disclosure.
FIG. 8 shows a THz signal generation method applicable to the present disclosure.
FIG. 9 shows a wireless communication transceiver applicable to the present disclosure.
FIG. 10 shows a transmitter structure applicable to the present disclosure.
FIG. 11 shows a modulator structure applicable to the present disclosure.
FIG. 12 shows a structure of a perceptron included in an artificial neural network applicable to the present disclosure.
FIG. 13 shows an artificial neural network structure applicable to the present disclosure.
FIG. 14 shows an example of a functional framework for application of artificial intelligence technology applicable to the present disclosure.
FIG. 15 shows an example of a procedure for utilizing an artificial intelligence model applicable to the present disclosure.
FIG. 16 shows another example of a procedure for utilizing an artificial intelligence model applicable to the present disclosure.
FIG. 17 shows still another example of a procedure for utilizing an artificial intelligence model applicable to the present disclosure.
FIG. 18 shows an AI technology-based communication procedure applicable to the present disclosure.
FIG. 19 shows a communication model applicable to the present disclosure.
FIG. 20 shows an example of a semantic communication framework applicable to the present disclosure.
FIG. 21 shows an example of initial access for semantic communication, based on an embodiment of the present disclosure.
FIG. 22 shows an example of a semantic diversity scheme based on multi-feature transmission, based on an embodiment of the present disclosure.
FIG. 23 and FIG. 24 show examples of background knowledge partitioning, based on an embodiment of the present disclosure.
FIG. 25 shows an example of a semantic diversity scheme based on partial background knowledge, based on an embodiment of the present disclosure.
FIG. 26 shows an example of a semantic encoder structure, based on an embodiment of the present disclosure.
FIG. 27 shows an example of background knowledge estimation based on multiple features, based on an embodiment of the present disclosure.
FIG. 28 shows an example of a procedure for receiving a data signal for semantic communication, based on an embodiment of the present disclosure.
FIG. 29 shows an example of a procedure for transmitting a data signal for semantic communication, based on an embodiment of the present disclosure.
FIG. 30 shows an example of a procedure for performing a task based on a semantic feature, based on an embodiment of the present disclosure.
FIG. 31 shows an example of a procedure for estimating background knowledge of a destination, based on an embodiment of the present disclosure.
FIG. 32 shows a signaling example for estimating background knowledge of a destination, based on an embodiment of the present disclosure.
FIG. 33 shows a signaling example for estimating background knowledge of a destination, based on an embodiment of the present disclosure.

### MODE FOR INVENTION

The embodiments of the present disclosure described below are combinations of elements and features of the present disclosure in specific forms. The elements or features may be considered selective unless otherwise mentioned. Each element or feature may be practiced without being combined with other elements or features. Further, the embodiment(s) of the present disclosure may be constructed by combining parts of the elements and/or features. Operation orders described in the embodiment(s) of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. In this case, the term "BS" may be replaced with a fixed station, a Node B, an eNode B (eNB), a gNode B (gNB), an ng-eNB, an advanced base station (ABS), an access point, etc.

In addition, in the embodiments of the present disclosure, the term terminal may be replaced with a user equipment (UE), a mobile station (MS), a subscriber station (SS), a mobile subscriber station (MSS), a mobile terminal, an advanced mobile station (AMS), etc.

In addition, a transmitter is a fixed and/or mobile node that provides a data service or a call service and a receiver is a fixed and/or mobile node that receives a data service or a call service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd generation partnership project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 38.211, 3GPP TS 38.212, 3GPP TS 38.213, 3GPP TS 38.321 and 3GPP TS 38.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

For example, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.XXX.

### Communication System Applicable to the Present Disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

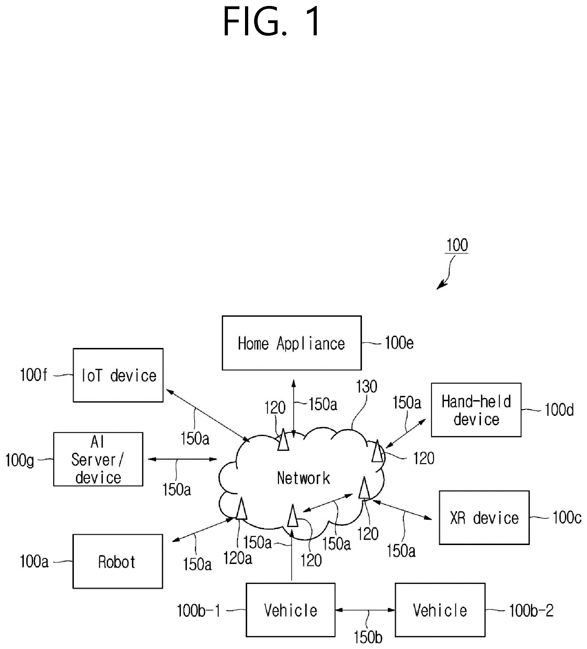

FIG. 1 shows an example of a communication system to which the present disclosure is applied.

Referring to FIG. 1, a communication system (100) to which the present disclosure is applied includes a wireless device, a base station, and a network. Here, the wireless device means a device performing communication by using a wireless access technology (e.g., LTE, LTE-A, LTE-A Pro, NR, 5G, 5G-A, 6G), and may be referred to as a communication/wireless/5G device. Although not limited thereto, the wireless device may include a robot (100a), vehicles (100b-1, 100b-2), an extended reality (XR) device (100c), a hand-held device (100d), a home appliance (100e), an Internet of Things (IoT) device (100f), and an artificial intelligence (AI) device/server (100g). For example, the vehicle may include a vehicle equipped with a wireless communication function, an autonomous driving vehicle, a vehicle capable of performing vehicle-to-vehicle communication, and the like. Here, the vehicles (100b-1, 100b-2) may include an unmanned aerial vehicle (UAV) (e.g., a drone). The XR device (100c) includes an augmented reality (AR)/virtual reality (VR)/mixed reality (MR) device, and may be implemented in the form of a head-mounted device (HMD), a head-up display (HUD) provided in a vehicle, a television, a smartphone, a computer, a wearable device, a home appliance, digital signage, a vehicle, a robot, and the like. The hand-held device (100d) may include a smartphone, a smart pad, a wearable device (e.g., a smart watch, smart glasses), a computer (e.g., a laptop), and the like. The home appliance (100e) may include a TV, a refrigerator, a washing machine, and the like. The IoT device (100f) may include a sensor, a smart meter, and the like. For example, the base station (120) and the network (130) may also be implemented as wireless devices, and a specific wireless device (120a) may operate as a base station/network node for another wireless device.

The wireless devices (100a to 100f) may be connected to the network (130) through the base station (120). AI technology may be applied to the wireless devices (100a to 100f), and the wireless devices (100a to 100f) may be connected to the AI server (100g) through the network (130). The network (130) may be configured by using a 3G network, a 4G (e.g., LTE) network, a 5G (e.g., NR) network, or a 6G network. The wireless devices (100a to 100f) may communicate with each other through the base station (120)/the network (130), but may also directly communicate (e.g., sidelink communication) without passing through the base station (120)/the network (130). For example, the vehicles (100b-1, 100b-2) may perform direct communication (e.g., vehicle-to-vehicle (V2V)/vehicle-to-everything (V2X) communication). In addition, the IoT device (100f) (e.g., a sensor) may directly communicate with another IoT device (e.g., a sensor) or another wireless device (100a to 100f).

Wireless communication/connection (150a, 150b, 150c) may be made between the wireless devices (100a to 100f)/the base station (120), and between the base station (120)/the base station (120). Here, the wireless communication/connection may be made through various wireless access technologies, such as uplink/downlink communication (150a), sidelink communication (150b) (or D2D communication), and inter-base station communication (150c) (e.g., relay, integrated access backhaul (IAB)). Through the wireless communication/connection (150a, 150b, 150c), the wireless device and the base station/wireless device, and the base station and the base station may transmit/receive wireless signals to/from each other. For example, the wireless communication/connection (150a, 150b, 150c) may transmit/receive signals through various physical channels. For this purpose, based on various proposals of the present disclosure, at least some of various configuration information configuration procedures for transmission/reception of wireless signals, various signal processing procedures (e.g., channel encoding/decoding, modulation/demodulation, resource mapping/demapping), resource allocation procedures, and the like may be performed.

### Apparatus applicable to the present disclosure

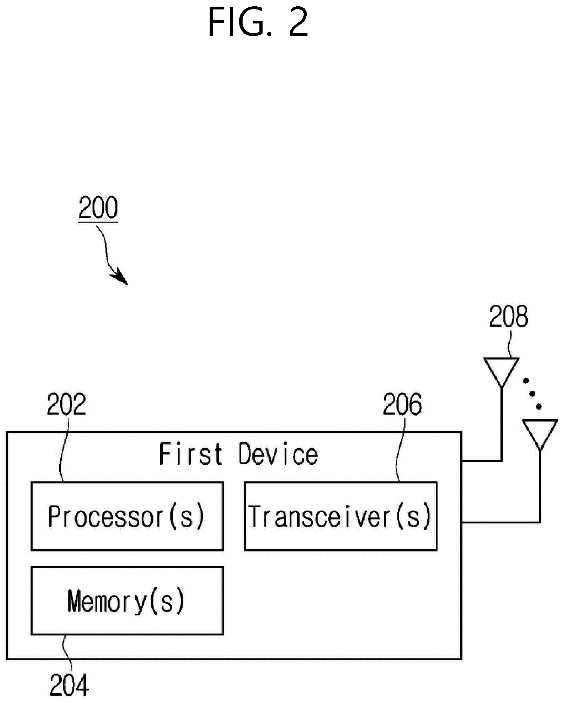

FIG. 2 shows an example of a wireless device to which the present disclosure may be applied.

Referring to FIG. 2, the wireless device (200) may transmit/receive wireless signals through various wireless access technologies (e.g., LTE, LTE-A, LTE-A Pro, NR, 5G, 5G-A, 6G). The wireless device (200) includes at least one processor (202) and at least one memory (204), and may further include at least one transceiver (206) and/or at least one antenna (208).

The processor (202) controls the memory (204) and/or the transceiver (206), and may be configured to implement the descriptions, functions, procedures, proposals, methods, and/or operation flowcharts disclosed in this document. For example, the processor (202) may process information in the memory (204) to generate first information/a first signal, and then transmit a wireless signal including the first information/the first signal through the transceiver (206). In addition, the processor (202) may receive a wireless signal including second information/a second signal through the transceiver (206), and then store information obtained from signal processing of the second information/the second signal in the memory (204). The memory (204) may be connected to the processor (202), and may store various kinds of information related to the operation of the processor (202). For example, the memory (204) may store software code including instructions for performing some or all of processes controlled by the processor (202), or for performing the descriptions, functions, procedures, proposals, methods, and/or operation flowcharts disclosed in this document. Here, the processor (202) and the memory (204) may be part of a communication modem/circuit/chip designed to implement wireless communication technology. The transceiver (206) may be connected to the processor (202), and may transmit and/or receive wireless signals through at least one antenna (208). The transceiver (206) may include a transmitter and/or a receiver. The transceiver (206) may be used interchangeably with an RF unit. In the present disclosure, the wireless device may also mean a communication modem/circuit/chip.

Hereinafter, hardware elements of the wireless device (200) will be described in more detail. Although not limited thereto, at least one protocol layer may be implemented by at least one processor (202). For example, at least one processor (202) may implement at least one layer (e.g., a functional layer such as a physical (PHY), a medium access control (MAC), an radio link control (RLC), a packet data convergence protocol (PDCP), an radio resource control (RRC), or an service data adaptation protocol (SDAP)). At least one processor (202) may generate at least one protocol data unit (PDU) and/or at least one service data unit (SDU) according to the descriptions, functions, procedures, proposals, methods, and/or operation flowcharts disclosed in this document. At least one processor (202) may generate a message, control information, data, or information according to the descriptions, functions, procedures, proposals, methods, and/or operation flowcharts disclosed in this document. At least one processor (202) may generate a signal (e.g., a baseband signal) including a PDU, an SDU, a message, control information, data, or information according to the functions, procedures, proposals, and/or methods disclosed in this document, and may provide the signal to at least one transceiver (206). At least one processor (202) may receive a signal (e.g., a baseband signal) from at least one transceiver (206), and may obtain a PDU, an SDU, a message, control information, data, or information according to the descriptions, functions, procedures, proposals, methods, and/or operation flowcharts disclosed in this document.

At least one processor (202) may be referred to as a controller, a microcontroller, a microprocessor, or a microcomputer. At least one processor (202) may be implemented by hardware, firmware, software, or a combination thereof. For example, at least one application specific integrated circuit (ASIC), at least one digital signal processor (DSP), at least one digital signal processing device (DSPD), at least one programmable logic device (PLD), or at least one field programmable gate array (FPGA) may be included in at least one processor (202). The descriptions, functions, procedures, proposals, methods, and/or operation flowcharts disclosed in this document may be implemented by using firmware or software, and the firmware or software may be implemented to include modules, procedures, functions, and the like. The firmware or software configured to perform the descriptions, functions, procedures, proposals, methods, and/or operation flowcharts disclosed in this document may be included in at least one processor (202), or may be stored in at least one memory (204) and driven by at least one processor (202). The descriptions, functions, procedures, proposals, methods, and/or operation flowcharts disclosed in this document may be implemented by using firmware or software in the form of code, instructions, and/or a set of instructions.

At least one memory (204) may be connected to at least one processor (202), and may store various forms of data, signals, messages, information, programs, code, indications, and/or instructions. At least one memory (204) may be configured as a read only memory (ROM), a random access memory (RAM), an erasable programmable read only memory (EPROM), a flash memory, a hard drive, a register, a cache memory, a computer-readable storage medium, and/or a combination thereof. At least one memory (204) may be located inside and/or outside at least one processor (202). In addition, at least one memory (204) may be connected to at least one processor (202) through various technologies such as wired or wireless connection.

At least one transceiver (206) may transmit user data, control information, wireless signals/channels, and the like mentioned in the methods and/or operation flowcharts of this document to at least one other device. At least one transceiver (206) may receive user data, control information, wireless signals/channels, and the like mentioned in the descriptions, functions, procedures, proposals, methods, and/or operation flowcharts disclosed in this document from at least one other device. For example, at least one transceiver (206) may be connected to at least one processor (202), and may transmit/receive wireless signals. For example, at least one processor (202) may control at least one transceiver (206) to transmit user data, control information, or a wireless signal to at least one other device. In addition, at least one processor (202) may control at least one transceiver (206) to receive user data, control information, or a wireless signal from at least one other device. In addition, at least one transceiver (206) may be connected to at least one antenna (208), and at least one transceiver (206) may be configured to transmit/receive user data, control information, wireless signals/channels, and the like mentioned in the descriptions, functions, procedures, proposals, methods, and/or operation flowcharts disclosed in this document through at least one antenna (208). In this document, the at least one antenna may be a plurality of physical antennas, or a plurality of logical antennas (e.g., antenna ports). At least one transceiver (206) may convert received wireless signals/channels and the like from an RF band signal into a baseband signal, in order to process the received user data, control information, wireless signals/channels, and the like by using at least one processor (202). At least one transceiver (206) may convert user data, control information, wireless signals/channels, and the like processed by using at least one processor (202) from a baseband signal into an RF band signal. For this purpose, at least one transceiver (206) may include an (analog) oscillator and/or a filter.

Components of the wireless device described with reference to FIG. 2 may be referred to by other terms from a functional point of view. For example, the processor (202) may be referred to as a controller, the transceiver (206) may be referred to as a communication unit, and the memory (204) may be referred to as a storage unit. In some cases, the communication unit may be used to mean including at least some of the processor (202) and the transceiver (206).

The structure of the wireless device described with reference to FIG. 2 may be understood as a structure of at least some of various devices. For example, the structure of the wireless device illustrated in FIG. 2 may be at least some of various devices described with reference to FIG. 1 (e.g., the robot (100a), the vehicles (100b-1, 100b-2), the XR device (100c), the hand-held device (100d), the home appliance (100e), the IoT device (100f), the AI device/server (100g)). Furthermore, according to various embodiments, in addition to the components illustrated in FIG. 2, the apparatus may further include other components.

For example, the apparatus may be a hand-held device such as a smartphone, a smart pad, a wearable device (e.g., a smart watch, smart glasses), or a portable computer (e.g., a laptop). In this case, the apparatus may further include at least one of a power supply unit for supplying power and including a wired/wireless charging circuit, a battery, and the like, an interface unit including at least one port (e.g., an audio input/output port, a video input/output port) for connection with another apparatus, and an input/output unit for inputting and outputting image information/signals, audio information/signals, data, and/or information input from a user.

For example, the apparatus may be a mobile apparatus such as a mobile robot, a vehicle, a train, an aerial vehicle (AV), whether manned or unmanned, or a ship. In this case, the apparatus may further include at least one of a driving unit including at least one of an engine, a motor, a power train, wheels, a brake, and a steering device of the apparatus, a power supply unit for supplying power and including a wired/wireless charging circuit, a battery, and the like, a sensor unit for sensing state information of the apparatus or around the apparatus, environmental information, and user information, an autonomous driving unit for performing functions such as route maintenance, speed control, and destination configuration, and a location measurement unit for obtaining location information of a moving body through a global positioning system (GPS) and various sensors.

For example, the apparatus may be an XR device such as an HMD, a HUD provided in a vehicle, a television, a smartphone, a computer, a wearable device, a home appliance, digital signage, a vehicle, or a robot. In this case, the apparatus may further include at least one of a power supply unit for supplying power and including a wired/wireless charging circuit, a battery, and the like, an input/output unit for obtaining control information, data, and the like from the outside and outputting a generated XR object, and a sensor unit for sensing state information of the apparatus or around the apparatus, environmental information, and user information.

For example, the apparatus may be a robot classifiable as an industrial, medical, household, or military robot according to a purpose of use or a field. In this case, the apparatus may further include at least one of a sensor unit for sensing state information of the apparatus or around the apparatus, environmental information, and user information, and a driving unit for performing various physical operations such as moving robot joints.

For example, the apparatus may be an AI device such as a TV, a projector, a smartphone, a PC, a laptop, a user equipment (UE) for digital broadcasting, a tablet PC, a wearable device, a set-top box (STB), a radio, a washing machine, a refrigerator, digital signage, a robot, or a vehicle. In this case, the apparatus may further include at least one of an input unit for obtaining various types of data from the outside, an output unit for generating an output related to sight, hearing, or touch, a sensor unit for sensing state information of the apparatus or around the apparatus, environmental information, and user information, and a training unit for training a model composed of an artificial neural network by using training data.

The structure of the wireless device illustrated in FIG. 2 may be understood as a part of a radio access network (RAN) node (e.g., a base station, a distributed unit (DU), a radio unit (RU), a remote radio head (RRH)). For example, the apparatus illustrated in FIG. 2 may be a RAN node. In this case, the apparatus may further include a wired transceiver for front haul and/or back haul communication. However, when the front haul and/or back haul communication is based on wireless communication, the at least one transceiver (206) illustrated in FIG. 2 may be used for the front haul and/or back haul communication, and a wired transceiver may not be included.

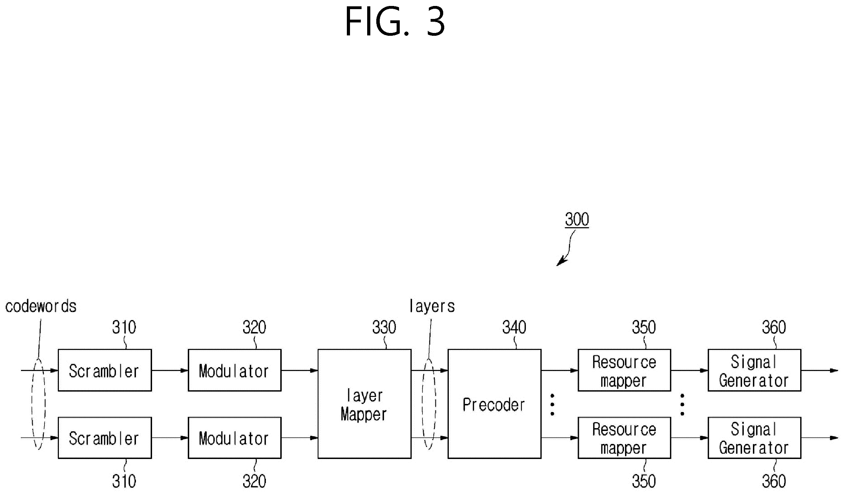

FIG. 3 shows a method for processing a transmission signal to which the present disclosure is applied. For example, the transmission signal may be processed by a signal processing circuit. At this time, the signal processing circuit (300) may include a scrambler (310), a modulator (320), a layer mapper (330), a precoder (340), a resource mapper (350), and a signal generator (360). At this time, for example, the operations/functions of FIG. 3 may be performed in the processor (202) and/or the transceiver (206) of FIG. 2. In addition, for example, the hardware elements of FIG. 3 may be implemented in the processor (202) and/or the transceiver (206) of FIG. 2. For example, blocks 310 to 360 may be implemented in the processor (202) of FIG. 2. In addition, blocks 310 to 350 may be implemented in the processor (202) of FIG. 2, and block 360 may be implemented in the transceiver (206) of FIG. 2, but the present disclosure is not limited to the above-described embodiment.

A codeword may be converted into a wireless signal through the signal processing circuit (300) of FIG. 3. Here, the codeword is an encoded bit sequence of an information block. The information block may include a transport block (e.g., an uplink shared channel (UL-SCH) transport block, a downlink shared channel (DL-SCH) transport block). The wireless signal may be transmitted through various physical channels (e.g., a physical uplink shared channel (PUSCH), a physical downlink shared channel (PDSCH)). Specifically, the codeword may be converted by the scrambler (310) into a scrambled bit sequence. A scrambling sequence used for scrambling is generated based on an initialization value, and the initialization value may include identification information of the wireless device and the like. The scrambled bit sequence may be modulated by the modulator (320) into a modulated symbol sequence. A modulation scheme may include pi/2-binary phase shift keying (pi/2-BPSK), m-phase shift keying (m-PSK), m-quadrature amplitude modulation (m-QAM), and the like.

The complex modulated symbol sequence may be mapped by the layer mapper (330) to at least one transmission layer. Modulation symbols of each transmission layer may be mapped by the precoder (340) to corresponding antenna port(s). An output z of the precoder (340) may be obtained by multiplying an output y of the layer mapper (330) by an N×M precoding matrix W. Here, N is the number of antenna ports, and M is the number of transmission layers. Here, the precoder (340) may perform precoding after performing transform precoding (e.g., discrete Fourier transform (DFT)) on complex modulation symbols. In addition, the precoder (340) may perform precoding without performing transform precoding.

The resource mapper (350) may map modulation symbols of each antenna port to time-frequency resources. The time-frequency resources may include a plurality of symbols (e.g., cyclic prefix-orthogonal frequency division multiple access (CP-OFDMA) symbols, DFT-spread-OFDMA (DFT-s-OFDMA) symbols) in a time domain, and may include a plurality of subcarriers in a frequency domain. The signal generator (360) generates a wireless signal from the mapped modulation symbols, and the generated wireless signal may be transmitted to another device through each antenna. For this purpose, the signal generator (360) may include an inverse fast Fourier transform (IFFT) module, a cyclic prefix (CP) inserter, a digital-to-analog converter (DAC), a frequency uplink converter, and the like.

A signal processing procedure for a reception signal in a wireless device may be configured as a reverse of the signal processing procedure (310 to 360) of FIG. 3. For example, the wireless device (e.g., 200 of FIG. 2) may receive a wireless signal from the outside through an antenna port/transceiver. The received wireless signal may be converted into a baseband signal through a signal restorer. For this purpose, the signal restorer may include a frequency downlink converter, an analog-to-digital converter (ADC), a CP remover, and a fast Fourier transform (FFT) module. Thereafter, the baseband signal may be restored into a codeword through a resource demapper procedure, a postcoding procedure, a demodulation procedure, and a descrambling procedure. The codeword may be restored into an original information block through decoding. Accordingly, a signal processing circuit (not shown) for a reception signal may include a signal restorer, a resource demapper, a postcoder, a demodulator, a descrambler, and a decoder.

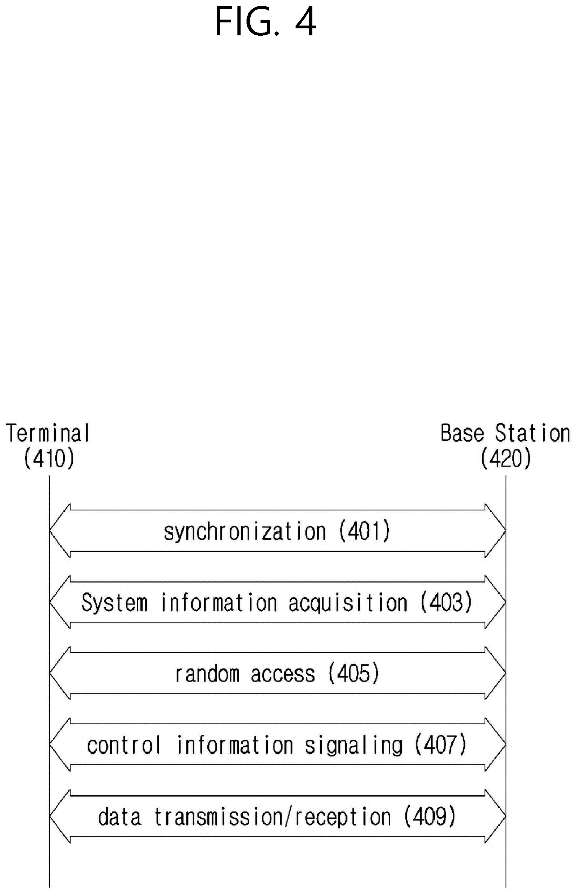

FIG. 4 shows a communication procedure between a UE and a base station applicable to the present disclosure. FIG. 4 exemplifies operations in which a UE (410) and a base station (420) transmit and/or receive data and operations performed before the operations.

Referring to FIG. 4, in step 401, the UE (410) and the base station (420) perform synchronization. For example, the UE (410) performs an initial cell search operation. Specifically, the UE (410) may detect at least one synchronization signal transmitted by the base station (420) according to a pre-configured rule. Here, the synchronization signal may include a plurality of synchronization signals (e.g., a primary synchronization signal, a secondary synchronization signal) classified according to a structure or a purpose. Through this, the UE (410) may identify a boundary of a frame, a subframe, a slot, and/or a symbol of the base station (420), and may obtain information related to the base station (420) (e.g., cell identifier).

In step 403, the UE (410) obtains system information transmitted by the base station (420). The system information is information related to attributes, characteristics, and/or capabilities of the base station (420) required to access the base station (420) and use a service, and may be classified according to content (e.g., whether the information is essential for access), a transmission structure (e.g., a channel used, whether the information is provided on-demand), and the like, and may be classified into, for example, a master information block (MIB) and a system information block (SIB). As necessary, before receiving the system information, the UE (410) may transmit a signal requesting the system information. However, requesting and providing the system information may be performed after a random access procedure to be described later.

In step 405, the UE (410) and the base station (420) perform a random access procedure. The UE (410) may transmit and/or receive at least one message (e.g., a random access preamble, a random access response (RAR) message) for the random access procedure based on information related to a random access channel of the base station (420) obtained through system information (e.g., a channel position, a channel structure, a structure of a supported preamble). For example, the UE (410) may transmit a preamble (e.g., MSG1) through the random access channel, receive an RAR message (e.g., MSG2), transmit, to the base station (420), a message (e.g., MSG3) including information related to the UE (410) (e.g., identification information) by using scheduling information included in the RAR message, and receive a message (e.g., MSG4) for contention resolution and/or connection establishment. As another example, MSG1 and MSG3 may be transmitted and received as one message, or MSG2 and MSG4 may be transmitted and received as one message.

In step 407, the UE (410) and the base station (420) perform signaling of control information. Here, the control information may be defined in various layers such as a layer controlling a connection (e.g., a radio resource control (RRC) layer), a layer processing mapping between a logical channel and a transport channel (e.g., a medium access control (MAC) layer), and a layer processing a physical channel (e.g., a physical (PHY) layer). For example, the UE (410) and the base station (420) may perform at least one of signaling for establishing a connection, signaling for determining a configuration related to communication, and signaling for indicating an allocated resource.

In step 409, the UE (410) and the base station (420) transmit and/or receive data. For example, the UE (410) and the base station (420) may process, transmit, and/or receive data based on signaling of control information. For example, when transmitting data, the UE (410) or the base station (420) may perform at least one of channel encoding, rate matching, scrambling, constellation mapping, layer mapping, waveform modulation, antenna mapping, and resource mapping for information bits. Conversely, when receiving data, the UE (410) or the base station (420) may perform at least one of signal extraction from a resource, waveform demodulation for each antenna, signal arrangement considering layer mapping, constellation demapping, descrambling, and channel decoding.

### 6G communication system and core implementation technologies of a 6G system

A 5G system defines various operating bands within frequency range 1 (FR1) including 410 MHz to 7125 MHz and frequency range 2 (FR2) including 24,250 MHz to 71,000 MHz. Thereafter, various frequencies are being discussed as operating bands of a 6G system, and use of frequencies higher than those of the 5G system is also being considered for a wider bandwidth and a higher transmission rate. As one of the frequencies, use of a terahertz (THz) frequency band including about 100 GHz to 10 THz is being discussed. The THz frequency band is a band having both penetrability of radio waves and rectilinearity of light waves, and communication using the THz frequency band is also expected to serve as a transitional role from conventional radio wave-centered communication to light wave-based communication.

A 6G (wireless communication) system has purposes of i) a very high data rate per device, ii) a very large number of connected devices, iii) global connectivity, iv) a very low latency, v) reducing energy consumption of battery-free IoT devices, vi) an ultra-reliable connection, and vii) connected intelligence having machine learning capability. A vision of the 6G system may have four aspects such as "intelligent connectivity", "deep connectivity", "holographic connectivity", and "ubiquitous connectivity", and the 6G system may satisfy requirements such as in [Table 1] below.

**[Table 1]**

| | |
|---|---|
| Per device peak data rate | 1 Tbps |
| E2E latency | 1 ms |
| Maximum spectral efficiency | 100 bps/Hz |
| Mobility support | up to 1000 km/hr |
| Satellite integration | Fully |
| AI | Fully |
| Autonomous vehicle | Fully |
| XR | Fully |
| Haptic Communication | Fully |

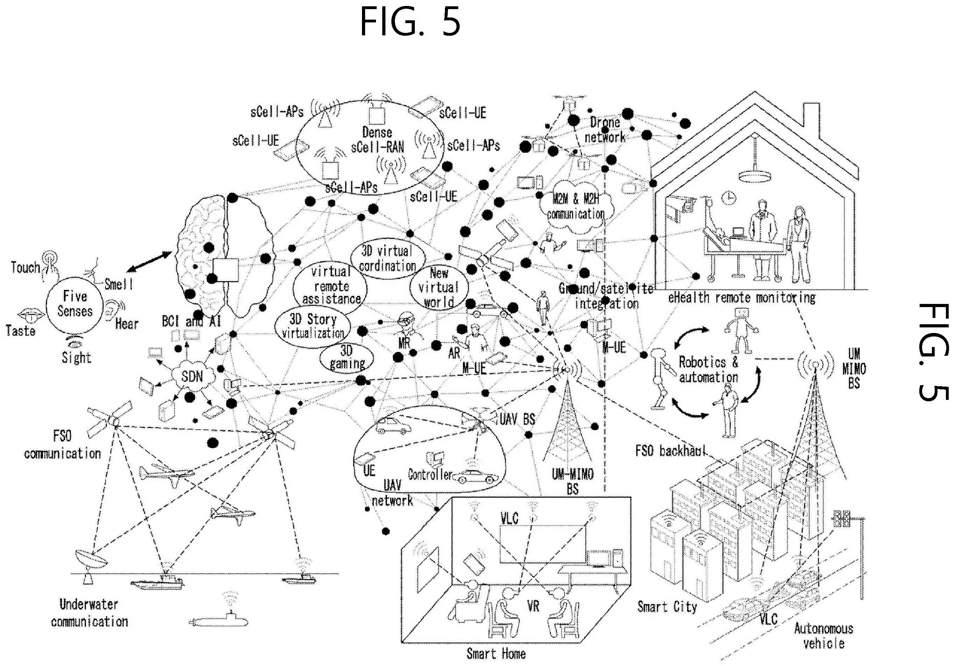

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security. FIG. 5 shows an example of a communication structure capable of being provided in a 6G system applicable to the present disclosure. Referring to FIG. 5, the 6G system is expected to have simultaneous wireless communication connectivity 50 times higher than that of a 5G wireless communication system. Ultra-reliable and low latency communication (URLLC), which is a key feature of 5G, is expected to become a more important technology in 6G communication by providing end-to-end latency of less than 1 ms. At this time, the 6G system will have much better volumetric spectrum efficiency unlike area spectrum efficiency frequently used. The 6G system may provide advanced battery technology for a very long battery life and energy harvesting, so that mobile devices in the 6G system may not need to be separately charged.

As core implementation technologies of the 6G system, technologies such as artificial intelligence (AI), terahertz (THz) communication, optical wireless technology, free-space optics (FSO) backhaul networks, massive multiple input multiple output (MIMO) technology, blockchain, 3D networking, quantum communication, unmanned aerial vehicles, cell-free communication, wireless information and energy transfer (WIET), integration of sensing and communication, integration of access backhaul networks, hologram beamforming, big data analysis, and a large intelligent surface (LIS) may be adopted.

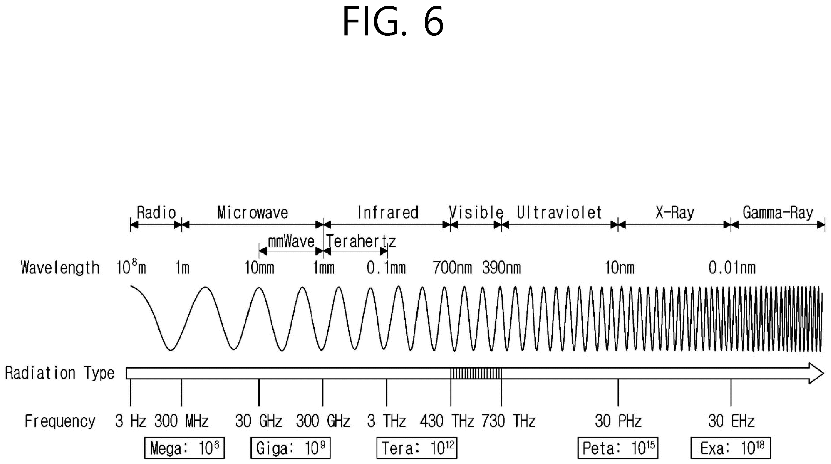

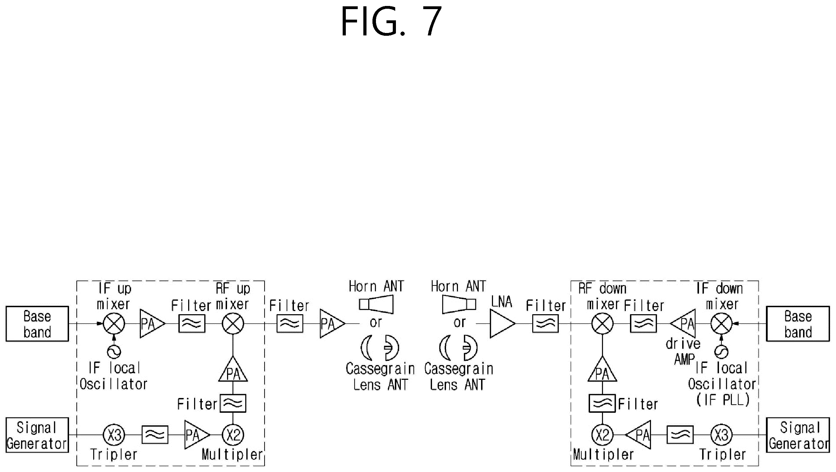

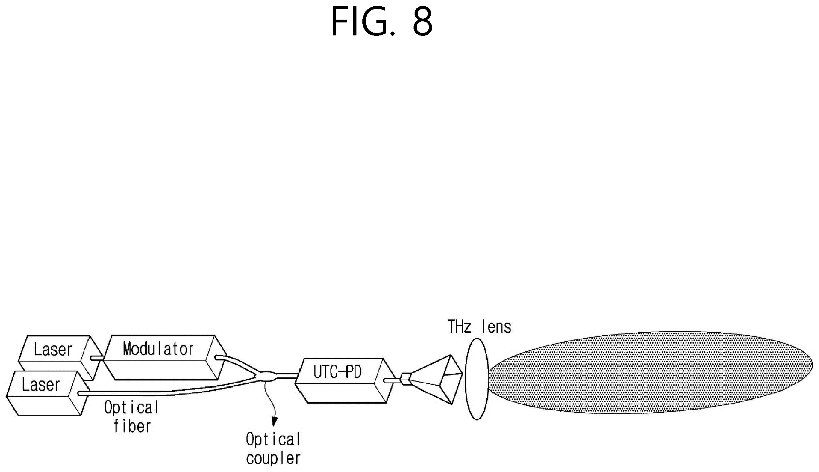

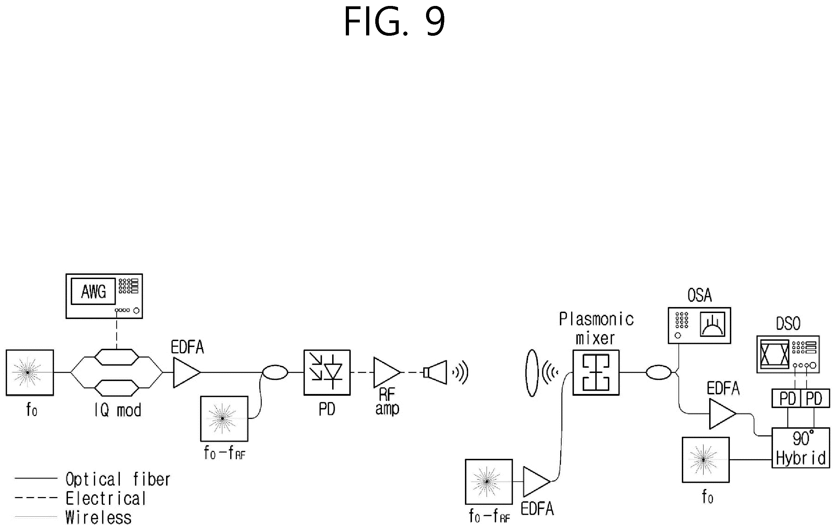

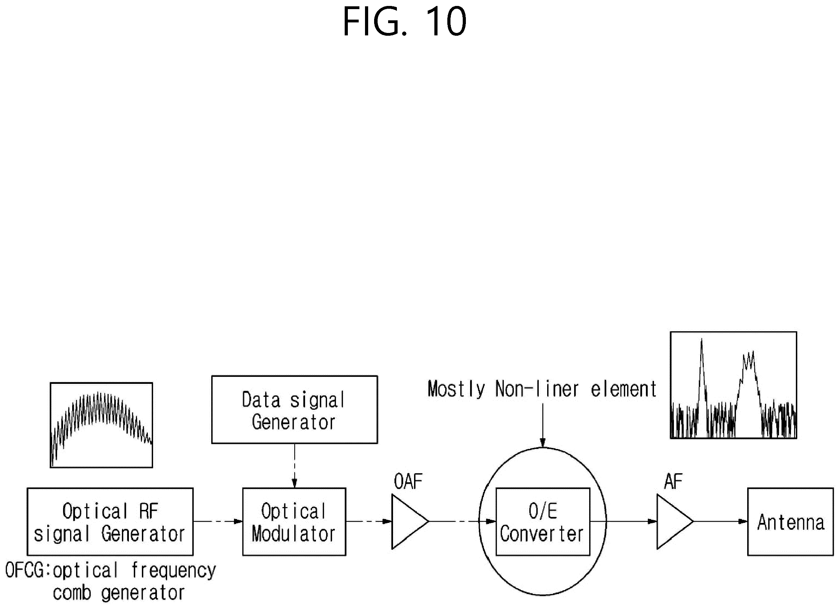

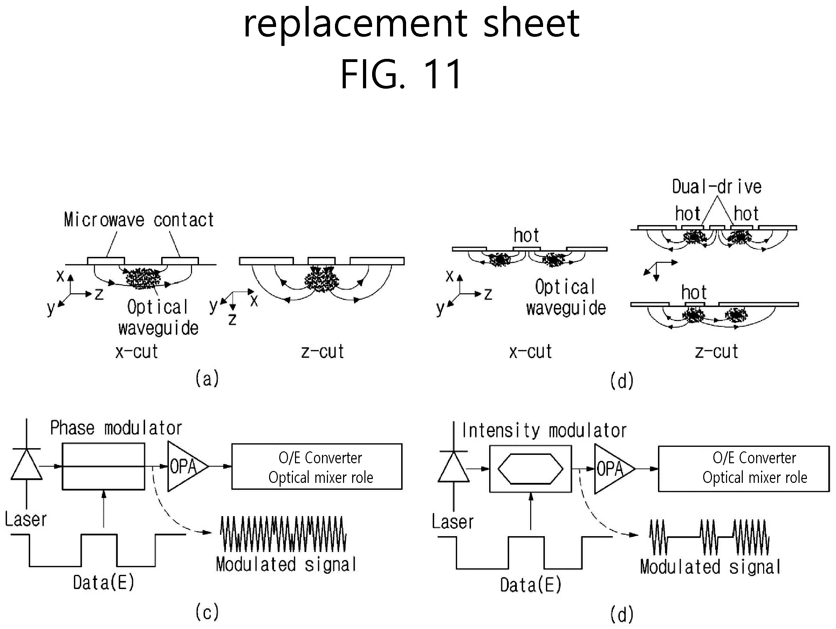

For example, THz communication is communication using a spectrum in a frequency band between 0.1 THz and 10 THz having corresponding wavelengths in a range of 0.03 mm to 3 mm, as shown in FIG. 6, and may be implemented by using circuit elements having a structure as shown in FIG. 7. In addition, optical wireless technology is technology for generating and modulating a THz signal by using an optical element, and may be implemented based on an apparatus having a structure as shown in FIG. 8, FIG. 9, FIG. 10, and FIG. 11.

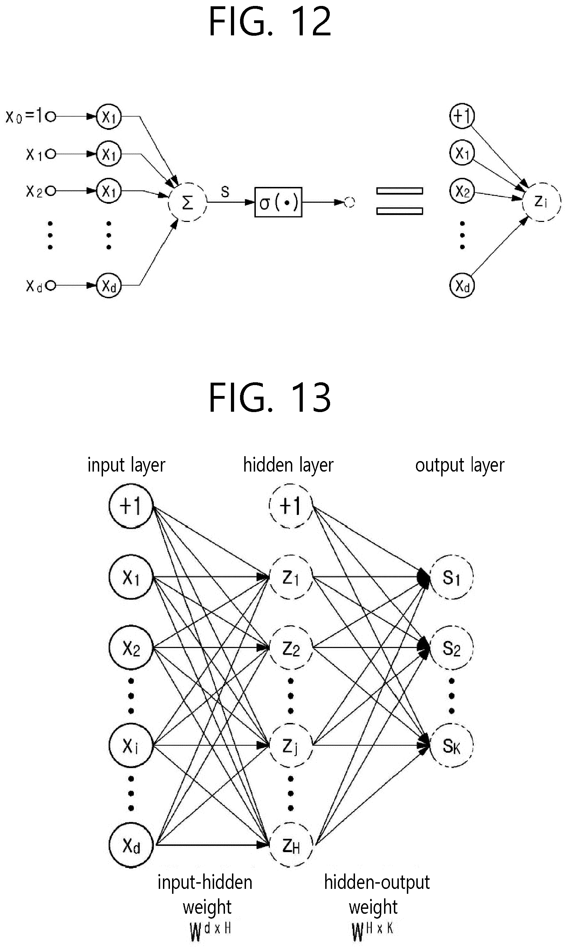

In addition, AI may be implemented based on various models such as a neural network and machine learning. For example, an AI model having a neural network structure may be based on a structure of a perceptron such as FIG. 12. Referring to FIG. 12, an artificial neural network may be configured by a plurality of perceptrons. According to the structure of the perceptron, when an input vector x={*x*₁, *x*₂*, ..., x_{d}*} is input, weights {*w*₁, *w*₂, ..., *w_{d}*} are multiplied by respective components, all resulting values are summed, and then an activation function σ(·) is applied. When a simple perceptron structure shown in FIG. 12 is expanded into a huge artificial neural network structure, an input vector may be applied to different multi-dimensional perceptrons. When perceptrons are stacked, a neural network having an input layer, a hidden layer, and an output layer as shown in FIG. 13 may be configured.

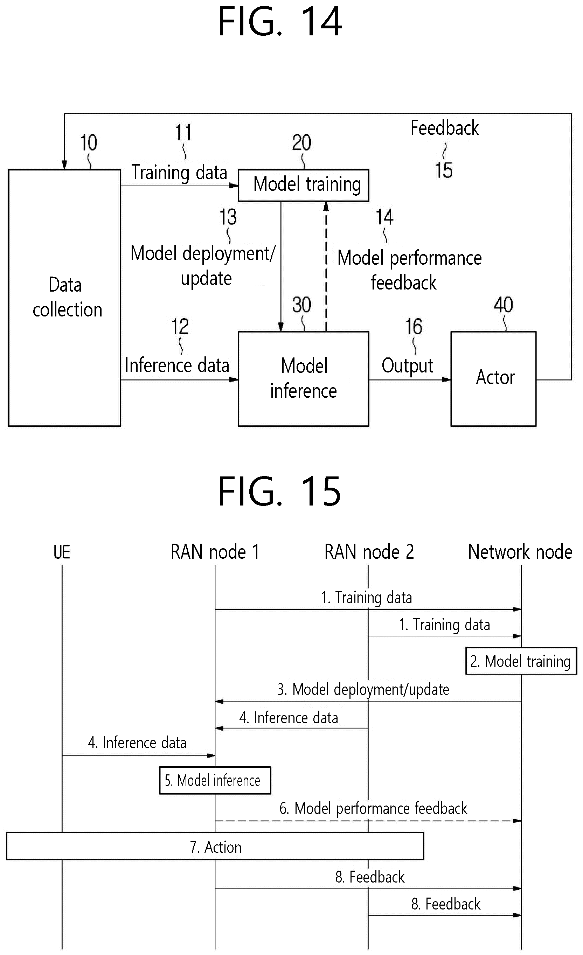

AI technology utilizing the structure of a neural network as described above may be operated based on a functional framework as shown in FIG. 14 below. FIG. 14 shows an example of a functional framework for application of AI technology applicable to the present disclosure. First, a data collection block 1410 generates training data 1411 and/or inference data 1411 including processed input data by performing data preparation for input data collected from objects (e.g., UE, RAN node, network node, etc.). A model training block 1420 performs training for an AI model by using the training data 1411, and provides information related to the trained model to a model inference block 1430. The model inference block 1430 generates an output 1416 by performing inference and/or prediction by using the inference data 1411. In addition, the model inference block 1430 may provide model performance feedback 1414 to the model training block 1420. Here, the output 1416 means an inference output of the AI model generated by the model inference block 1430, and details of the inference output may vary according to a use case. An actor block 1440 triggers or performs a designated task/action based on the output 1416. The actor block 1440 may trigger a task/action for another object (e.g., at least one UE, at least one RAN node, at least one network node, etc.) or for itself. Among the functions illustrated in FIG. 14 described above, any one function may also be performed through collaboration by 2 or more entities among a RAN, a network node, OAM of a network operator, or a UE. This may be referred to as a split AI operation.

FIG. 15 shows an example of a procedure for utilizing an AI model applicable to the present disclosure. FIG. 15 illustrates a case in which a model training function (e.g., a function of the model training block 1420) is included in a network node, and a model inference function (e.g., a function of the model inference block 1430) is included in a RAN node. Referring to FIG. 15, in step 1, RAN node 1 and RAN node 2 transmit input data (e.g., training data) for training of an AI model to the network node. Here, RAN node 1 and RAN node 2 may also transmit, to the network node, data collected from a UE (e.g., measurements of the UE related to RSRP, RSRQ, and SINR of a serving cell and a neighboring cell, a location of the UE, a speed, etc.). In step 2, the network node trains the AI model by using the received training data. In step 3, the network node deploys/updates the AI model to/for RAN node 1 and/or RAN node 2. RAN node 1 and/or RAN node 2 may continue to perform model training based on the received AI model. In the present procedure, it is assumed that the AI model is deployed/updated only to/for RAN node 1. In step 4, RAN node 1 receives input data (e.g., inference data) for AI model inference from the UE and RAN node 2. In step 5, RAN node 1 generates output data (e.g., prediction or decision) by performing AI model-based inference by using the received inference data. In step 6, if applicable, RAN node 1 may transmit model performance feedback to the network node. In step 7, RAN node 1, RAN node 2, and the UE (or "RAN node 1 and the UE", or "RAN node 1 and RAN node 2") perform an action based on the output data. For example, in the case of a load balancing action, the UE may move from RAN node 1 to RAN node 2. In step 8, RAN node 1 and RAN node 2 transmit feedback information to the network node.

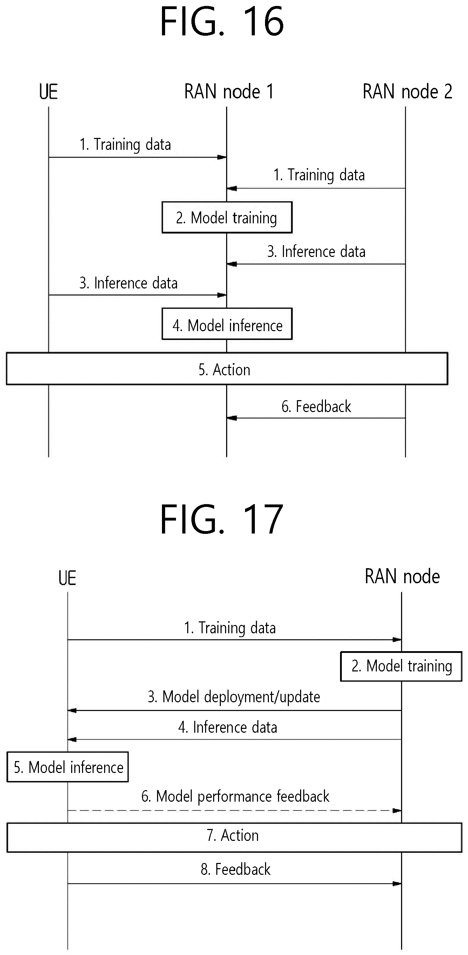

FIG. 16 shows another example of a procedure for utilizing an AI model applicable to the present disclosure. FIG. 16 illustrates a case in which a model training function (e.g., a function of the model training block 1420) and a model inference function (e.g., a function of the model inference block 1430) are included in a RAN node. Referring to FIG. 16, in step 1, the UE and RAN node 2 transmit input data (e.g., training data) for training of an AI model to RAN node 1. In step 2, RAN node 1 trains the AI model by using the received training data. In step 3, RAN node 1 receives input data (e.g., inference data) for AI model-based inference from the UE and RAN node 2. In step 4, RAN node 1 generates output data (e.g., prediction or decision) by performing AI model-based inference by using the received inference data. In step 5, RAN node 1, RAN node 2, and the UE (or "RAN node 1 and the UE", or "RAN node 1 and RAN node 2") perform an action based on the output data. For example, in the case of a load balancing action, the UE may move from RAN node 1 to RAN node 2. In step 6, RAN node 2 transmits feedback information to RAN node 1.

FIG. 17 shows still another example of a procedure for utilizing an AI model applicable to the present disclosure. FIG. 17 illustrates a case in which a model training function (e.g., a function of the model training block 1420) is included in a RAN node, and a model inference function (e.g., a function of the model inference block 1430) is included in a UE. Referring to FIG. 17, in step 1, the UE transmits input data (e.g., training data) for training of an AI model to the RAN node. Here, the RAN node may collect data from various UEs and/or from another RAN node. In step 2, the RAN node trains the AI model by using the received training data. In step 3, the RAN node deploys/updates the AI model to/for the UE. The UE may continue to perform model training based on the received AI model. In step 4, the UE receives input data (e.g., inference data) for AI model-based inference from the RAN node and/or another UE. In step 5, the UE generates output data (e.g., prediction or decision) by performing AI model-based inference by using the received inference data. In step 6, if applicable, the UE may transmit model performance feedback to the RAN node. In step 7, the UE and the RAN node perform an action based on the output data. In step 8, the UE transmits feedback information to the RAN node.

According to the framework and procedure described above, in a wireless communication system, an AI model may be trained and utilized. In the framework and procedure described above, various data such as input data, training data, and inference data have been introduced, and specific contents of the data described above may vary according to a task for which the AI model is utilized. For example, information used in various embodiments of the present disclosure described below may be included in the data described above.

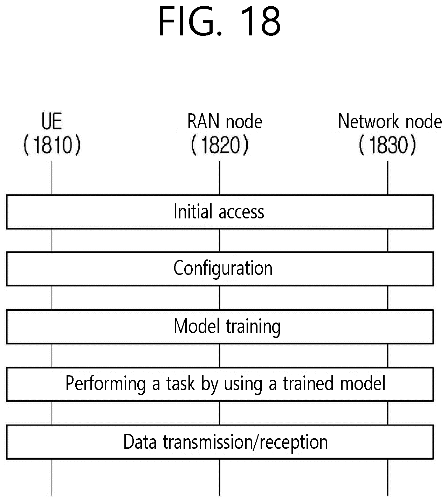

FIG. 18 shows an AI technology-based communication procedure applicable to the present disclosure. Detailed procedures illustrated in FIG. 18 may be combined with various embodiments of the present disclosure described below. For example, data generated according to various embodiments of the present disclosure may be used for an operation (e.g., configuration, training, inference, and/or data transmission and reception) in at least one of the detailed procedures illustrated in FIG. 18. As another example, a result of inference illustrated in FIG. 18 may be used to transmit and/or receive data according to various embodiments of the present disclosure.

Referring to FIG. 18, in step 1801, at least one among a UE 1810, a RAN node 1820, and a network node 1830 performs an initial access procedure. For example, in the present step, at least one among an initial cell search operation, a system information acquisition operation, a random access operation, and a registration operation may be performed. In step 1803, at least one among the UE 1810, the RAN node 1820, and the network node 1830 performs a configuration procedure. Through the configuration procedure, parameters, resources, connections, and/or entities required for performing subsequent procedures in layers between the UE 1810 and the RAN node 1820 and/or in at least one layer between the UE 1810 and the network node 1830 may be determined and/or generated. Here, the configuration procedure may be performed based on information, a state, and/or a characteristic of an AI model used for subsequent training and inference.

In step 1805, at least one among the UE 1810, the RAN node 1820, and the network node 1830 performs a model training procedure. At least one among the UE 1810, the RAN node 1820, and the network node 1830 may collect training data, and may perform learning by using the training data. For example, the model training procedure may be performed as described with reference to FIG. 15, FIG. 16, or FIG. 17. If an offline-trained model is used, the present step may be omitted.

In step 1807, at least one among the UE 1810, the RAN node 1820, and the network node 1830 performs a task by using the trained model. For example, the task may be performed by a result of inference and/or prediction using the trained model. For example, the task may be a procedure belonging to a communication protocol, may be a prior operation for subsequent data transmission and/or reception, may be related to data transmission and/or reception, or may be related to processing of data (e.g., encoding, decoding, etc.).

In step 1809, at least one among the UE 1810, the RAN node 1820, and the network node 1830 transmits and/or receives data. Here, the result of the task performed in step 1807 may be used. In some cases, the task performed in step 1807 may include transmission and/or reception of data, and in this case, the present step may be omitted because it is a part of step 1807.

### Specific embodiments of the present disclosure

The present disclosure is related to a technique for transmitting and receiving a semantic feature in a wireless communication system supporting semantic communication. Specifically, the present disclosure is related to a technique in which a source estimates background knowledge possessed by a destination, and generates and transmits a semantic feature corresponding to source data based on the estimated background knowledge. Here, the semantic feature may be referred to as a semantic representation. In addition, background knowledge means data sets required for generating and interpreting a semantic representation for semantic communication. Background knowledge adoptable in the present disclosure may be defined in various forms, and as one example, may be defined as at least one data set in a graph form indicating a relation between nodes.

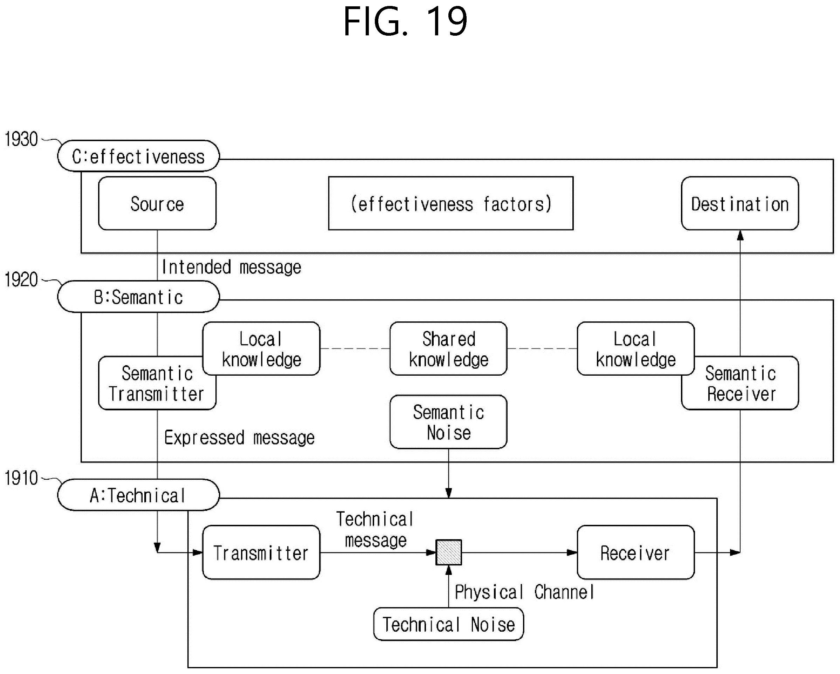

Problems related to communication may be divided into three levels as shown in FIG. 19 according to the philosophy of Shannon and Weaver. FIG. 19 shows a communication model applicable to the present disclosure. A problem of level A 1910 is a technical problem related to how accurately symbols in communication can be delivered, and a problem of level B 1920 is a semantic problem related to how accurately delivered symbols convey desired meaning. A problem of level C 1930 is an effectiveness problem related to how effectively received meaning influences an action in a desired manner.

Shannon's information theory focuses only on the technical problem of level A 1910 and does not consider communication from a semantic viewpoint. However, Weaver explains that, when a semantic transmitter, a semantic receiver, semantic noise, and the like are added to Shannon's communication model, Shannon's information theory is sufficiently general to consider problems of level B 1920 and level C 1930.

Meanwhile, one of various goals of 6G communication is to enable various new services for interconnecting humans and machines. Therefore, beyond considering only the technical problem of level A 1910 in a communication system, it is necessary to provide a semantic communication scheme in which the semantic problem of level B 1920 is considered.

In general, in communication for exchanging information between people, information of each word is related to corresponding "meaning". Referring to this in relation to the communication model of FIG. 19, when a concept related to a message sent from a source is accurately interpreted at a destination, it may be considered that correct semantic communication has been performed.

For semantic communication, a source may generate a semantic feature based on given or collected raw data, and may deliver the generated semantic feature to a destination. The destination interprets and reasons about the received semantic feature according to an intention of the source. Here, semantic communication requires an approach from a viewpoint of whether a downstream task, which is a task performed at the destination, operates according to the intention of the source by using the received semantic feature, for example, from a viewpoint of whether interpretation and/or reasoning for the semantic feature has been properly performed, rather than a conventional objective of reducing a reconstruction error occurring in a process in which the destination restores the received semantic representation to original raw data. Therefore, the destination uses background knowledge possessed by the destination in performing a reasoning operation, and it is desirable that background knowledge included in data delivered from the source is reflected in the background knowledge of the destination such that a correct interpretation result may be obtained.

As described above, the semantic feature generated at the source and delivered to the destination should be generated in consideration of a downstream task to be operated at the destination. Therefore, it is necessary to provide a task-oriented semantic communication system for semantic communication. This is to introduce invariance useful for the downstream task while preserving task-relevant information.

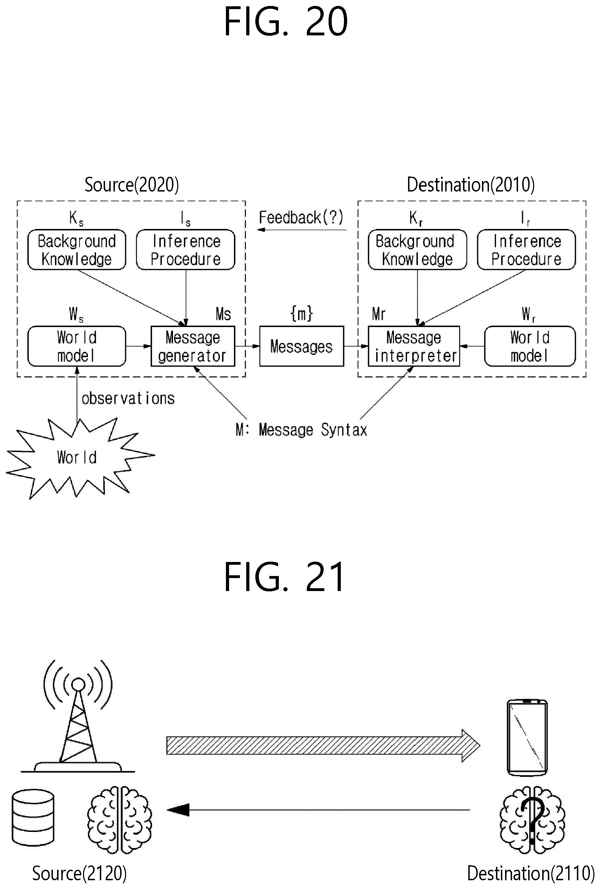

Characteristics of semantic communication at level B of FIG. 19 may be represented as shown in FIG. 20. FIG. 20 shows an example of a semantic communication framework applicable to the present disclosure. Referring to FIG. 20, with respect to a message x delivered from a source 2020 to a destination 2010, the following definition may be applied.

Shannon entropy H(W) of a world model *W* is represented as in [Equation 1] below.$H \left(W\right) = - {\sum }_{w ∈ W} μ \left(w\right) {log}_{2} μ \left(w\right)$

In [Equation 1], H(W) is Shannon entropy for a world model *W,* and may be referred to as model entropy of a semantic source. In addition, *µ*(·) means a probability distribution for the corresponding model.

When the world model *Wₛ* is referred to as a set of interpretation having a probability distribution *µ, µ*(·) is referred to as a probability distribution for the corresponding model, and *Wₓ* is referred to as a set of its models for the corresponding model *Wₛ* in which x is "true", a logical probability m(x) of the message x is represented as in Equation 2.$m \left(x\right) = \frac{μ \left({W}_{x}\right)}{μ \left(W\right)} = \frac{{\sum }_{w ∈ W , w | = x} μ \left(w\right)}{{\sum }_{w ∈ W} μ \left(w\right)}$

In [Equation 2], m(x) is a logical probability of the message x, *W* is a world model, *Wₓ* is a set for the corresponding model *Wₛ* in which x is "true", and *µ*(·) means a probability distribution for the corresponding model. Here, ⊨ means a general propositional satisfaction relation. ⊨ may also be referred to as 'entails' or 'is a model', and this semantically means "entails the following result", or "is a stronger condition". For example, ⊨ reveals relatedness from a semantic viewpoint.

A semantic entropy *Hₛ*(*x*) of the message x is defined as in [Equation 3].${H}_{s} \left(x\right) = - {log}_{2} \left(m\left(x\right)\right)$

In [Equation 3], *Hₛ*(*x*) is semantic entropy of the message x, and m(x) is a logical probability of the message x.

Here, when background knowledge K is considered, a set of possible worlds in [Equation 2] and [Equation 3] is limited to a set compatible with K. Therefore, the set of possible worlds in [Equation 2] and [Equation 3] is represented as conditional logical probabilities as in [Equation 4] and [Equation 5].$m \left(\left.x\right|K\right) = \frac{μ \left({W}_{x}\right)}{μ \left(W\right)} = \frac{{\sum }_{w ∈ W , w | = K , x} μ \left(w\right)}{{\sum }_{w ∈ W , w | = K} μ \left(w\right)}$

In [Equation 4], *m*(*x*|*K*) means a conditional logical probability of the message x when background knowledge is K, *W* is a world model, *Wₓ* is a set for the corresponding model *Wₛ* in which x is "true", and *µ*(·) means a probability distribution for the corresponding model. Here, ⊨ means a general propositional satisfaction relation.${H}_{s} \left(x\left|K\right.\right) = - {log}_{2} \left(m\left(\left.x\right|K\right)\right)$

In [Equation 5], *Hₛ*(*x*|*K*) is semantic entropy of the message x when background knowledge is K, and *m*(*x*|*K*) means a conditional logical probability of the message x when background knowledge is K.

For example, it is assumed that statistical probabilities are p, and a truth table in which background knowledge is K is given as in [Table 2] below.

[Table 2] is a truth table in which p(A)=p(B)=0.5 and K={A→B}.

**[Table 2]**

| # | A | B | A→B | probability |
|---|---|---|---|---|
| 1 | 0 | 0 | 1 | 0.25 |
| 2 | 0 | 1 | 1 | 0.25 |
| 3 | 1 | 0 | 0 | 0.25 |
| 4 | 1 | 1 | 1 | 0.25 |

Here, possible worlds are reduced to a series of truth assignments in which A → B is true. For example, possible worlds may be reduced to Case 1, Case 2, and Case 4 in which A → B is true.

Therefore, the conditional logical probabilities may be represented as in [Equation 6], [Equation 7], and [Equation 8].$m \left(\left.A\right|K\right) = 1 / 3$$m \left(\left.B\right|K\right) = 2 / 3$$m \left(A∧B\right) = 1 / 3$

Here, since background knowledge K exists, the conditional logical probabilities are different from priori statistical probabilities, and in a new distribution, A and B are no longer logically independent. For example, *m*(*A*|*K*)*m*(*B*|*K*) *≠ m*(*A* Λ *B*|*K*)*.*

When background knowledge K exists, a new distribution for a model set may be represented as in [Equation 9] and [Equation 10].$μ ′ = \frac{μ \left(w\right)}{{\sum }_{v ∈ W , v | = K} μ \left(v\right)}$

In [Equation 9], *µ*' is a new distribution of a model set, and *µ*(·) is a probability distribution for the corresponding model. In addition, ⊨ means a general propositional satisfaction relation.$H \left(W\left|K\right.\right) = {\sum }_{w ∈ W , w | = K} μ ′ \left(w\right) {log}_{2} \left(μ′\left(w\right)\right)$

In [Equation 10], *H*(*W*|*K*) is model entropy of world model W when background knowledge is K, and *µ'*(·) is a new distribution for the corresponding model.

Model entropy of a source when background knowledge is not considered is represented as in [Equation 11], and model entropy of the source when background knowledge is considered is represented as in [Equation 12].$H \left(W\right) = - 4 ∗ 0.25 {log}_{2} \left(0.25\right) = 2$

In [Equation 11], H(W) is model entropy for the world model W when background knowledge is not considered.$H \left(W\left|K\right.\right) = - 3 ∗ 1 / 3 {log}_{2} \left(\frac{1}{3}\right) = 1.585$

In [Equation 12], H(W|K) is model entropy for the world model W when background knowledge is K.

As shown in [Equation 11] and [Equation 12], shared background knowledge helps prevent loss of information in compression of a message that a source intends to deliver, and shows that, by only transmitting and receiving a short message, information of the source can be obtained at the destination as much as possible. As such, since communication at a semantic level considers background knowledge, performance improvement may be provided with respect to an existing technical level. For example, as described above, when a source generates and delivers a semantic feature in consideration of a downstream task of a destination, utilizing background knowledge may be regarded as being consistent with an objective of performing semantic communication.

In order to perform semantic communication including all of the components described above, a new layer referred to as a semantic layer, which governs an overall operation for semantic data and messages, may be added. The semantic layer may be included in each of a source and a destination in building a task-oriented semantic communication system. For communication between semantic layers of the source and the destination, it is necessary to define a protocol, which is a rule between layers, and a series of operation procedures.

For example, in order to perform accurate representation and reasoning in semantic communication of a newly defined semantic layer, a process of agreement for background knowledge information of the source and the destination is required. In particular, in a situation in which information related to background knowledge between the source and the destination is not shared, an estimation process for background knowledge is required in order to perform semantic communication. Therefore, the present disclosure proposes a scheme in which a source estimates background knowledge of a destination.

FIG. 21 shows an example of initial access for semantic communication, based on an embodiment of the present disclosure. Referring to FIG. 21, each of a source 2120 and a destination 2110 possesses background knowledge. Here, the source 2120 may possess large-scale background knowledge, and the destination 2110 may possess small-scale background knowledge. In particular, background knowledge of the destination 2110 may correspond to a part of background knowledge of the source 2120. Therefore, by estimating which part background knowledge of the destination 2110 corresponds to among background knowledge possessed by the source 2120, the source 2120 may obtain information related to background knowledge of the destination 2110.

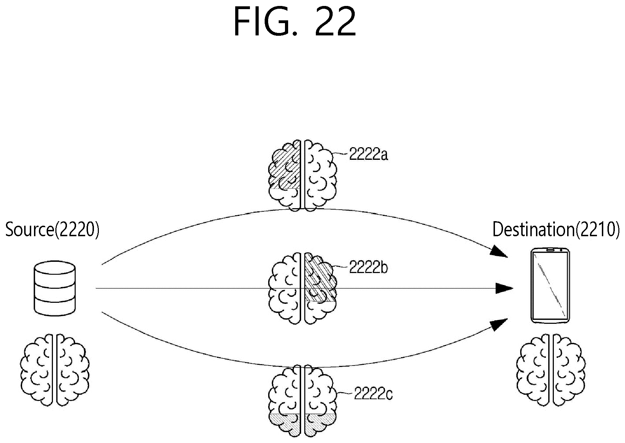

The present disclosure proposes, as a scheme for obtaining information related to background knowledge of a destination at a source, a semantic diversity scheme based on multiple feature transmission. The semantic diversity scheme is obtained by applying a channel diversity scheme used in an existing wireless communication system to semantic communication. The existing channel diversity scheme is a technique for improving reliability for a received signal by transmitting and receiving a same signal by using different wireless channels. In the existing channel diversity scheme, a diversity gain may be obtained by combining the corresponding signals based on channel information at a transmitting end or a receiving end. In contrast, a diversity scheme in semantic communication is different from the existing channel diversity scheme in that background knowledge 2222a, 2222b, and 2222c as shown in FIG. 22 are treated as channels between a source 2220 and a destination 2210. FIG. 22 shows an example of a semantic diversity scheme based on multiple feature transmission, based on an embodiment of the present disclosure. Referring to FIG. 22, the source 2220 may generate multiple semantic features for source data by using a plurality of background knowledge 2222a, 2222b, and 2222c according to the semantic diversity scheme, and may transmit the generated multiple semantic features to the destination 2210. The multiple semantic features may be referred to as a plurality of semantic features.

An operation of the source and the destination according to the semantic diversity scheme may vary according to whether the source and the destination share information related to background knowledge. For example, when the source and the destination share information related to background knowledge, a closed-loop semantic diversity scheme may be used in which a combining ratio for the multiple semantic features is configured and a semantic diversity gain for a downstream task may be obtained. In contrast, when the source and the destination do not share information related to background knowledge, an open-loop semantic diversity scheme may be used in which a single feature is selected from among the multiple semantic features, and a partial operation for a downstream task is performed by using the single feature.

Hereinafter, the present disclosure assumes a situation in which the source and the destination do not share information related to background knowledge. Therefore, in initial access for performing semantic communication, the source and the destination of the present disclosure share information related to background knowledge based on the open-loop semantic diversity scheme. For example, the source may estimate and obtain information related to background knowledge of the destination based on the open-loop semantic diversity scheme.

Specifically, an initial access process for semantic communication according to various embodiments of the present disclosure includes a process of dividing background knowledge possessed by a source into a plurality of partial background knowledge and configuring the plurality of partial background knowledge as a candidate set of background knowledge of a destination, a process of generating and transmitting multiple semantic features using the plurality of partial background knowledge as attention, and a process of obtaining information related to background knowledge of the destination through selection of the multiple semantic features. Hereinafter, the present disclosure proposes a semantic layer protocol and procedure for performing initial access for semantic communication as described above.

Background knowledge of the source and the destination may have a knowledge graph structure. Background knowledge of the source may be divided into N knowledge partitions based on graph clustering. The destination may possess, as its own background knowledge, one partial background knowledge among the N knowledge partitions possessed by the source. In the present disclosure, a knowledge partition may be referred to as partial knowledge, partial background knowledge, or another term having an equivalent technical meaning thereto.

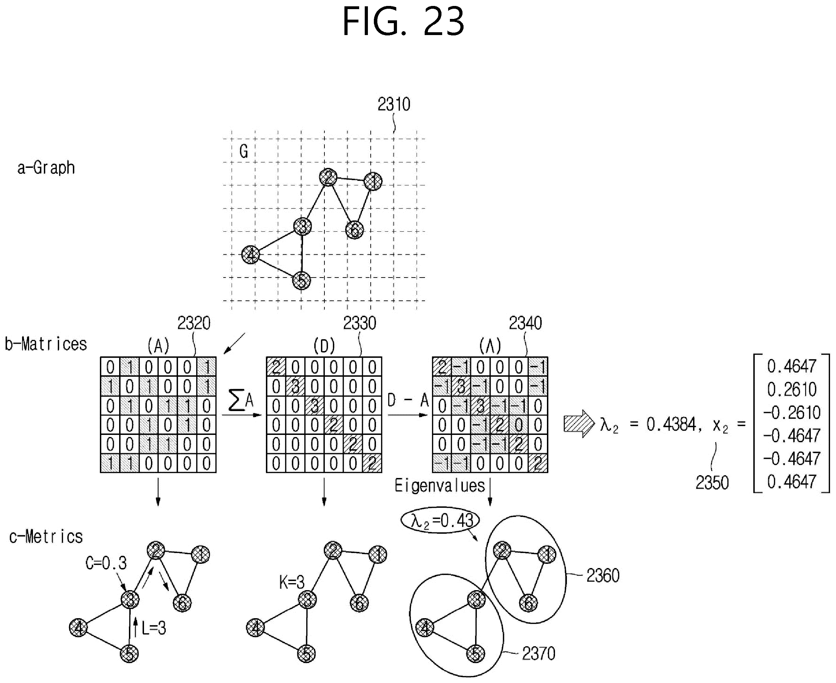

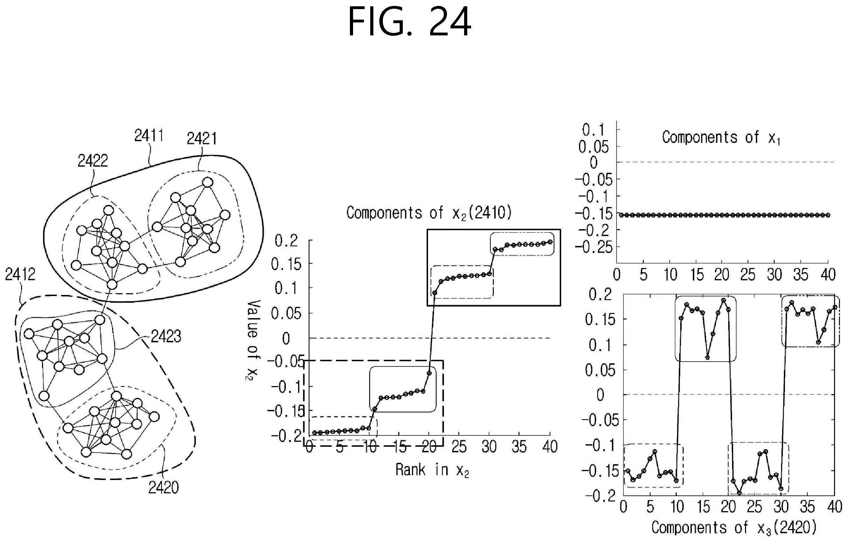

FIG. 23 and FIG. 24 show examples of background knowledge partitioning, based on an embodiment of the present disclosure. FIG. 23 and FIG. 24 illustrate spectral clustering based on an adjacency matrix of a knowledge graph, as examples of graph clustering for background knowledge.

Referring to FIG. 23, a source may generate a Laplacian matrix (L=D-A) 2340 based on an adjacency matrix A 2320 for a knowledge graph G 2310 and a diagonal matrix D 2330 indicating degrees of nodes for the knowledge graph G 2310, and may perform spectral clustering based on the Laplacian matrix 2340. For example, the source may perform clustering for respective nodes of the knowledge graph according to signs of a second minimum eigenvector *x*₂ 2350 of the Laplacian matrix 2340. For example, node 1, node 2, and node 6, for which signs of the second minimum eigenvector *x*₂ 2350 are plus, may configure one group *x*₂ 2360, and node 3, node 4, and node 5, for which signs of the second minimum eigenvector are minus, may configure one group 2370. For example, background knowledge having a knowledge graph G including node 1 to node 6 may be divided into partial background knowledge having a knowledge graph including node 1, node 2, and node 6, and partial background knowledge having a knowledge graph including node 3, node 4, and node 5.

In addition, as shown in FIG. 24, the source may perform spectral clustering for forming more clusters for nodes of background knowledge based on intervals of component values of the second minimum eigenvector *x*₂ or the third minimum eigenvector *x*₃. For example, nodes included in background knowledge may be divided to form two clusters 2411 and 2412 according to values of components of the second minimum eigenvector *x*₂ 2410, or may be divided to form four clusters 2421, 2422, 2423, and 2424 according to component values of the third minimum eigenvector *x*₃ 2420. Alternatively, nodes of background knowledge may be divided to form a plurality of clusters based on other eigenvectors. Here, one cluster may correspond to one partial background knowledge.

The spectral clustering of FIG. 23 and FIG. 24 described above is one example of a scheme for dividing background knowledge into a plurality of partial background knowledge, and various embodiments of the present disclosure are not limited thereto. For example, various embodiments of the present disclosure may also be applied to background knowledge divided with another structure and another scheme.

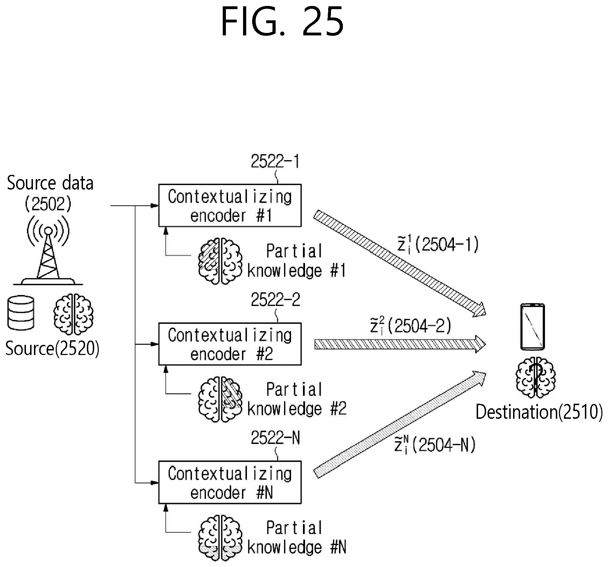

FIG. 25 shows an example of a semantic diversity scheme based on partial background knowledge, based on an embodiment of the present disclosure. FIG. 25 illustrates a semantic diversity scheme using N partial background knowledge.

Referring to FIG. 25, a source 2520 generates multiple semantic features for source data 2502 by using a plurality of contextualizing encoders 2522-1, 2522-2, ..., 2522-N, and transmits the generated multiple semantic features to a destination 2510.

Each of the plurality of contextualizing encoders 2522-1, 2522-2, ..., 2522-N generates a semantic feature corresponding to input source data 2502 by using partial background knowledge as attention. The partial background knowledge may be obtained by dividing background knowledge of the source into a plurality of pieces, as described above. For example, an n-th contextualizing encoder encodes, with respect to a graph representation of source data 2502, an embedding *xᵢ* corresponding to an i-th graph component into a contextualized feature ${{z}^{˜}}_{i}^{n}$ by utilizing n-th partial background knowledge. The contextualized feature may be referred to as a semantic feature or a contextualized semantic feature. For example, contextualizing encoder #1 2522-1 generates a semantic feature ${{z}^{˜}}_{i}^{1}$ 2504-1 corresponding to source data 2502 by using partial background knowledge #1 as attention, contextualizing encoder #2 2522-2 generates a semantic feature ${{z}^{˜}}_{i}^{2}$ 2504-2 corresponding to source data 2502 by using partial background knowledge #2 as attention, and contextualizing encoder #N 2522-N generates a semantic feature ${{z}^{˜}}_{i}^{n}$ 2504-N corresponding to source data 2502 by using partial background knowledge #N as attention.

The multiple semantic features generated by using the plurality of contextualizing encoders 2522-1, 2522-2, ..., 2522-N may be transmitted to the destination 2510 at a same time point, or may be transmitted to the destination 2510 at different time points. For example, the multiple semantic features may each be sequentially transmitted to the destination 2510.

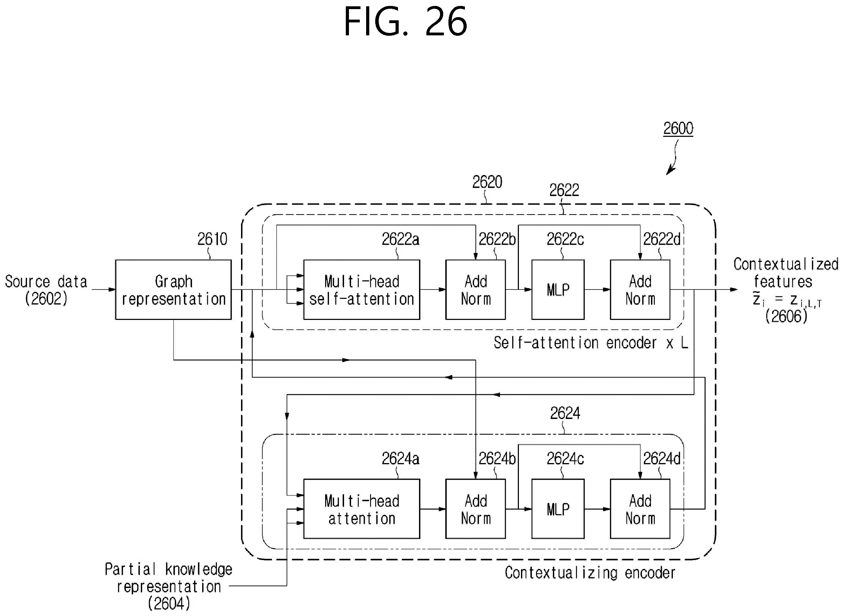

FIG. 26 shows an example of a semantic encoder structure, based on an embodiment of the present disclosure.

Referring to FIG. 26, a semantic encoder 2600 includes a graph representation block 2610 and at least one contextualizing encoder 2620.

The graph representation block 2610 converts source data into input data having a graph structure, and provides the converted input data to the contextualizing encoder 2620. The contextualizing encoder 2620 is a graph transformer-based encoder utilizing background knowledge of a graph structure as attention, and specifically, generates a contextualized feature for the input data by using partial background knowledge as attention. For this, the contextualizing encoder 2620 may be configured to include L self-attention encoders 2622 and an additional attention encoder 2624.

Each of the L self-attention encoders 2622 includes a multi-head self-attention block 2622a, an addition and normalization block 2622b, a Multi-Layer Perceptron (MLP) block 2622c, and an addition and normalization block 2622d. The multi-head self-attention block 2622a includes K attention heads, represents respective input vectors in different representation spaces according to respective purposes by using a plurality of query vectors, key vectors, and value vectors, and obtains self-attention values for the respective input vectors. The addition and normalization block 2622b is a layer normalization block, and outputs a normalized result obtained by adding and normalizing an input and an output of the multi-head self-attention block 2622a. The MLP block 2622c is a fully connected layer, and performs fine learning for each input value. The addition and normalization block 2622d is a layer normalization block, and outputs a normalized result obtained by adding and normalizing an input and an output of the MLP block 2622c.

The additional attention encoder 2624 includes a multi-head attention block 2624a, an addition and normalization block 2624b, an MLP block 2624c, and an addition and normalization block 2622d. The multi-head attention block 2624a receives, as input, an output of the self-attention encoder 2622 and a graph representation 2604 of partial background knowledge, performs multi-head attention, and outputs a result thereof. The addition and normalization block 2624b is a layer normalization block, and outputs a normalized result obtained by adding and normalizing an output of the graph representation block 2610 and an output of the multi-head attention block 2624a. The MLP block 2624c is a fully connected layer, and performs fine learning for each input value. The addition and normalization block 2624d is a layer normalization block, and outputs a normalized result obtained by adding and normalizing an input and an output of the MLP block 2624c.

As described above, the contextualizing encoder 2620 generates a self-attention-based semantic feature *z_{i,L,t}* by utilizing a graph transformer structure using L self-attention encoders 2622 each having K heads. The self-attention-based semantic feature may be determined through operations such as determining a multi-head attention-based feature based on similarity for previous self-attention-based features, normalization for a sum of the multi-head attention-based feature and a previous self-attention-based feature, and aggregation of results of multi-head attention. For example, the self-attention-based semantic feature may be generated as in [Equation 13] and [Equation 14].${m}_{i , l , t} = \frac{1}{K} {\sum }_{k = 1}^{K} {\sum }_{j ∈ N \left(i\right)} softmax \left({a}_{k}\left({z}_{i , l , t}, {z}_{j , l , t}\right)\right) {W}_{k} {z}_{j , l , t}$

In [Equation 13], *m_{i,l,t}* is an output feature of a multi-head attention block in an 1-th self-attention encoder in a t-th assimilation process for an i-th graph component, and K means heads of the self-attention encoder 2622. softmax( ) is a function having a characteristic of normalizing input values into values between 0 and 1 and outputting the same, with a total sum of output values always being 1. *aₖ*() is an attention function used in a k-th attention head, and calculates similarity between input arguments. *z_{i,l,t}* is a final output feature of the 1-th self-attention encoder in the t-th assimilation process for the i-th graph component, *z_{j,l,t}* is a final output feature of the 1-th self-attention encoder in the t-th assimilation process for a j-th graph component, and *Wₖ* is a weight matrix used in the k-th attention head.${z}_{i , l + 1 , t} = LN \left(LN\left({m}_{i , l , t}+{z}_{i , l , t}\right)+f\left(LN\left({m}_{i , l , t}+{z}_{i , l , t}\right)\right)\right)$

In [Equation 14], *z*_{*i*,*l*+1*,*t} is a final output feature of an 1+1-th self-attention encoder in the t-th assimilation process for the j-th graph component, LN( ) is a layer normalization function, *m_{i,l,t}* is a final output feature of a multi-head attention block in the 1+1-th self-attention encoder in the t-th assimilation process for the j-th graph component, *z_{i,l,t}* is a final output feature of the 1-th self-attention encoder in the t-th assimilation process for the j-th graph component, and *f*( ) is a function for aggregating results of multi-head attention. *f*( ) may be implemented as a multi-layered feed forward neural network.

The contextualizing encoder 2620 determines an attention value *αᵢ* between the self-attention-based semantic feature *z_{i,L,t}* and an embedding vector corresponding to partial background knowledge. The attention value *αᵢ* may be determined based on similarity between the self-attention-based semantic feature and the embedding vector. For example, the attention value *αᵢ* may be calculated as in [Equation 15] below. The contextualizing encoder 2620 performs, by using the additional attention encoder 2624, an assimilation process including the attention value with respect to a graph representation *xᵢ* of source data, and uses a result thereof again as an input of the self-attention encoder 2622. The contextualizing encoder 2620 repeatedly performs the assimilation process using the additional attention encoder 2624 T times, and generates a contextualized feature *z̃ᵢ*.${α}_{i} = {\sum }_{c ∈ C} softmax \left(a\left({z}_{i , L , t}, {S}_{c}\right)\right) {S}_{c}$

In [Equation 15], *αᵢ* is an i-th attention value, softmax( ) is a function for normalizing all input values into values between 0 and 1 and outputting the same, a( ) is an inner product-based attention function capable of measuring similarity between input arguments, *z_{i,L,t}* is a self-attention feature for the i-th graph component after passing through a total of L self-attention encoder layers in a t-th assimilation process, and *S_{c}* means an embedding vector having an index c among graph components of partial background knowledge of the source.${z}_{i , 0 , t + 1} = LN \left(LN\left({α}_{i}+{x}_{i}\right)+f\left(LN\left({α}_{i}+{x}_{i}\right)\right)\right)$

In [Equation 16], *z*_{*i,*0*,t+*1} is a semantic feature that, after passing through a t-th assimilation, again enters a first input of the self-attention encoder, LN( ) is a layer normalization function, αᵢ is an i-th attention value, *xᵢ* is an i-th graph representation of source data, and *f*( ) is a function for aggregating results of multi-head attention. *f*( ) may be implemented as a multi-layered feed forward neural network.${{z}^{˜}}_{i} = {z}_{i , L , T}$

In [Equation 17], *z̃ᵢ* is a contextualized feature for i-th source data, and *z_{i,L,T}* is a semantic feature generated for the i-th graph component through L self-attention encodings and T assimilation processes, and is a feature finally output from the contextualizing encoder.

Through the process as described above, the source generates multiple semantic features utilizing a plurality of partial background knowledge as attention for single source data, and transmits the generated multiple semantic features to the destination. Here, the multiple semantic features may be simultaneously transmitted, or may be sequentially transmitted.

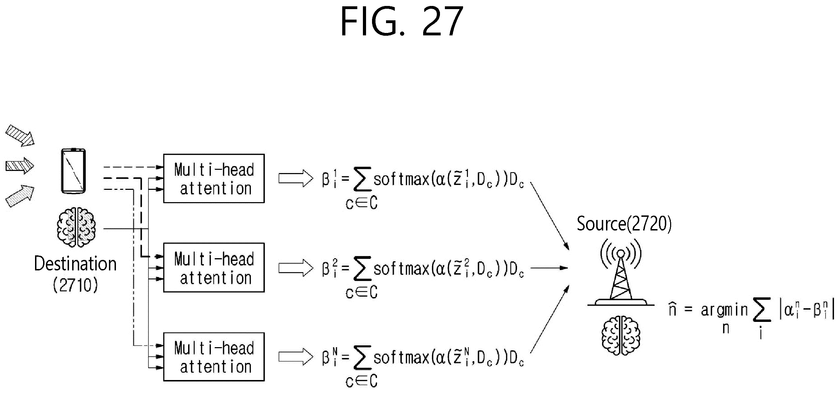

FIG. 27 shows an example of background knowledge estimation based on multiple features, based on an embodiment of the present disclosure.

Referring to FIG. 27, a destination 2710 receives multiple semantic features from a source 2720, and performs reasoning for the multiple semantic features by using a multi-head attention mechanism based on partial background knowledge being possessed. Specifically, the destination 2710 determines an attention value between an embedding vector of background knowledge being possessed and the received multiple semantic features based on similarity between the multiple semantic features and the embedding vector. For example, an attention value ${β}_{i}^{n}$ is calculated as in [Equation 18].${β}_{i}^{n} = {\sum }_{c ∈ C} softmax \left(a\left({{z}^{˜}}_{i}^{n}, {D}_{c}\right)\right) {D}_{c}$

In [Equation 18], ${β}_{i}^{n}$ means an attention value for an n-th multiple semantic feature of an i-th index, softmax( ) is a function for normalizing all input values into values between 0 and 1 and outputting the same, a( ) is an inner product-based attention function capable of measuring similarity between input arguments, ${{z}^{˜}}_{i}^{n}$ means an n-th multiple semantic feature of an i-th index, and *D_{c}* means a component having an index c among node embeddings of background knowledge possessed by the destination.

In [Equation 18], an attention coefficient $softmax \left(a\left({{z}^{˜}}_{i}^{n}, {D}_{c}\right)\right)$ calculated in a process of calculating an attention value ${β}_{i}^{n}$ is used for classification of the i-th index, and the attention value ${β}_{i}^{n}$ may be interpreted as a weighted sum in which a classification result is utilized for embedding of background knowledge. Therefore, the destination 2710 may transmit, to the source, information related to partial background knowledge possessed by the destination by feeding back an attention value ${β}_{i}^{n}$ calculated at the destination 2710 to the source. Here, the source 2720 calculates a difference between an attention value ${α}_{i}^{n}$*αᵢ* used for generating the multiple semantic features and an attention value ${β}_{i}^{n}$ received from the destination 2710, and determines partial background knowledge of an encoder having a smallest calculated difference as background knowledge possessed by the destination 1710.

As described above, the source may estimate and/or determine background knowledge possessed by the destination based on the multiple semantic features. Specifically, the source may divide entire background knowledge based on a knowledge graph being possessed into N partial background knowledge based on graph clustering, and may configure the divided partial background knowledge as candidates for background knowledge of the destination. Here, the destination may possess, as background knowledge, one of candidates for partial background knowledge of the source. The source may generate multiple semantic features ${{z}^{˜}}_{i}^{1} ∼ {{z}^{˜}}_{i}^{N}$ having the divided partial background knowledge as attention by performing encoding for source data by using N contextualizing encoders. The source transmits the multiple semantic features ${{z}^{˜}}_{i}^{1} ∼ {{z}^{˜}}_{i}^{N}$ to the destination. The destination receives the multiple semantic features from the source, and calculates attention values ${β}_{i}^{1} ∼ {β}_{i}^{N}$ between the received multiple semantic features and an embedding vector based on background knowledge being possessed. The destination feeds back the calculated attention values ${β}_{i}^{1} ∼ {β}_{i}^{N}$ to the source. The source compares the fed-back attention values ${β}_{i}^{1} ∼ {β}_{i}^{N}$ with attention values ${α}_{i}^{1} ∼ {α}_{i}^{N}$ generated in a multiple semantic feature encoding process, and may obtain information related to background knowledge possessed by the destination based on a comparison result. In the following description, in order to distinguish attention values ${α}_{i}^{1} ∼ {α}_{i}^{N}$ generated at the source and attention values generated at the destination, attention values generated at the source may be referred to as first attention values, and attention values generated at the destination may be referred to as second attention values.

According to an embodiment, the source may transmit first attention values ${α}_{i}^{1} ∼ {α}_{i}^{N}$ of the source generated in an encoding process to the destination. When the source transmits first attention values ${α}_{i}^{1} ∼ {α}_{i}^{N}$ of the source to the destination, the destination compares a first attention value ${α}_{i}^{n}$ and a second attention value ${β}_{i}^{n}$, and may select, from among the multiple semantic features, a semantic feature having, as attention, partial background knowledge having a highest similarity to background knowledge possessed by the destination based on a comparison result. The destination performs a downstream task by using the selected semantic feature, and may calculate a performance metric according to a result of performing the downstream task. By transmitting the selected semantic feature, information related to the selected semantic feature, and/or the performance metric to the source, the destination may request the source to fine-tune partial background knowledge corresponding to the corresponding semantic feature. However, this is only an embodiment, and the present disclosure is not limited thereto. For example, the source may not transmit a first attention value to the destination.

When the source does not transmit a first attention value to the destination, the source estimates and/or selects, from among a plurality of partial background knowledge of the source, one partial background knowledge that is the same as or most similar to background knowledge of the destination, and then may generate at least one semantic feature for source data by using the corresponding partial background knowledge, and may transmit the generated at least one semantic feature to the destination. Accordingly, the destination performs a downstream task by using the at least one semantic feature received from the source, and may calculate a performance metric according to a result of performing the downstream task. By transmitting the selected semantic feature, information related to the selected semantic feature, and/or the performance metric to the source, the destination may request the source to fine-tune partial background knowledge corresponding to the corresponding semantic feature.

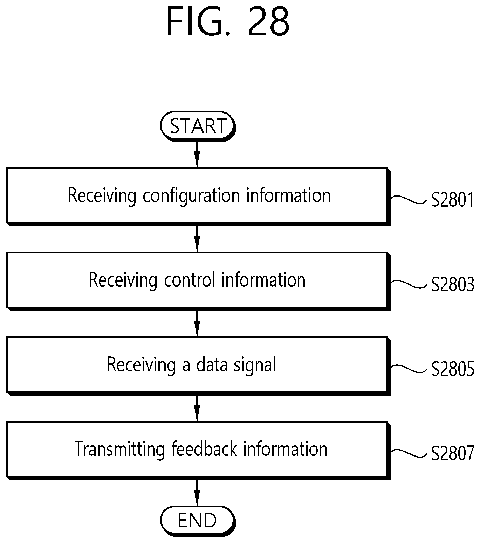

FIG. 28 shows an example of a procedure for receiving a data signal for semantic communication, based on an embodiment of the present disclosure. FIG. 28 illustrates a method performed by a UE operating as a destination.

Referring to FIG. 28, in step S2801, the UE receives configuration information related to communication from a base station. For example, the UE may receive synchronization information and/or system information for communication. Specifically, the UE may detect at least one synchronization signal by performing an initial cell search operation, and may obtain information related to the base station based on the synchronization signal. In addition, the UE may access the base station, and may obtain system information including information related to an attribute, a characteristic, and/or a capability of the base station required for use of a service. Information related to the capability of the base station may include information related to a capability of semantic communication. In addition, according to an embodiment, the configuration information may include information or a parameter required for performing a procedure for identifying partial background knowledge.

In step S2803, the UE receives control information from the base station. The control information may include at least one among control information related to establishment of a connection between the UE and the base station, control information for determining a configuration related to communication, and control information for indicating allocated resources. For example, the UE may receive control information for establishing a connection for semantic communication, control information for determining a configuration related to semantic communication, or control information for indicating resources for semantic communication. Alternatively, the UE may receive scheduling information for receiving at least one semantic feature.

In step S2805, the UE receives a data signal from the base station. For example, the UE receives the data signal from the base station based on the configuration information and the control information. Here, the data signal includes a plurality of semantic features generated based on a plurality of partial background knowledge derived from background knowledge information of the base station. Each of the plurality of semantic features may be generated based on a plurality of contextualizing encoders utilizing, as attention, partial background knowledge that is at least partially different from each other for source data.

In step S2807, the UE transmits feedback information to the base station. For example, the UE generates feedback information for the data signal, and transmits the generated feedback information to the base station. For example, the feedback information may include ACK(acknowledge)/NACK(negative-ACK) information indicating whether decoding succeeds. Alternatively, according to an embodiment, the feedback information includes information used at the base station to estimate one, among the plurality of partial background knowledge of the base station, that is most similar to background knowledge possessed by the UE. Specifically, the feedback information includes second attention values between a plurality of semantic features received from the base station and an embedding vector of background knowledge being possessed by the UE.

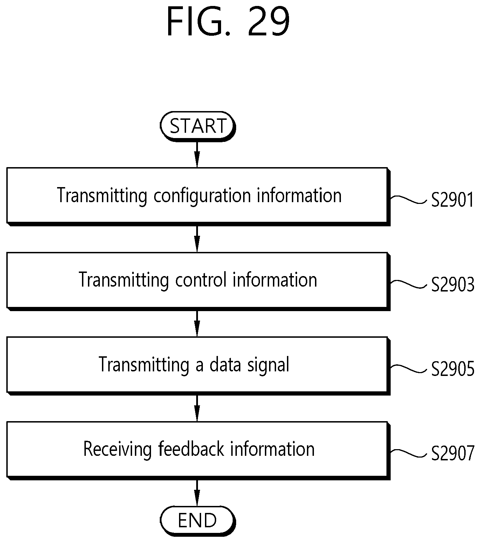

FIG. 29 shows an example of a procedure for transmitting a data signal for semantic communication, based on an embodiment of the present disclosure. FIG. 29 illustrates a method performed by a base station operating as a source.

Referring to FIG. 29, in step S2901, the base station transmits configuration information related to communication. For example, the base station transmits synchronization information and/or system information for communication. Specifically, the base station may transmit at least one synchronization signal including information related to the base station, and may transmit system information including information related to an attribute, a characteristic, and/or a capability of the base station required for use of a service by the UE. Information related to the capability of the base station may include information related to a capability of semantic communication. In addition, according to an embodiment, the configuration information may include information or a parameter required for performing a procedure for identifying partial background knowledge.

In step S2903, the base station transmits control information to the UE. The control information may include at least one among control information related to establishment of a connection between the UE and the base station, control information for determining a configuration related to communication, and control information for indicating allocated resources. For example, the base station may transmit, to the UE, control information for establishing a semantic communication connection, control information for determining a configuration related to semantic communication, or control information for indicating resources for semantic communication. Alternatively, the base station may transmit scheduling information for receiving at least one semantic feature.

In step S2905, the base station transmits a data signal to the UE. For example, the base station transmits the data signal to the UE based on the configuration information and the control information. Here, the data signal includes a plurality of semantic features generated based on a plurality of partial background knowledge derived from background knowledge information of the base station. Each of the plurality of semantic features may be generated based on a plurality of contextualizing encoders utilizing, as attention, partial background knowledge that is at least partially different from each other for source data.

In step S2907, the base station receives feedback information from the UE. For example, in response to transmission of the data signal, the base station receives the feedback information from the UE. For example, the feedback information may include ACK/NACK information indicating whether decoding succeeds. Alternatively, according to an embodiment, the feedback information may include second attention values between a plurality of semantic features received from the base station and an embedding vector based on background knowledge being possessed by the UE. The base station may estimate one partial background knowledge, among the plurality of partial background knowledge of the base station, that is most similar to background knowledge possessed by the UE by using the second attention values received from the UE. The base station may perform communication with the UE by generating a semantic feature corresponding to source data by using the estimated one partial background knowledge, and transmitting the generated semantic feature to the UE.

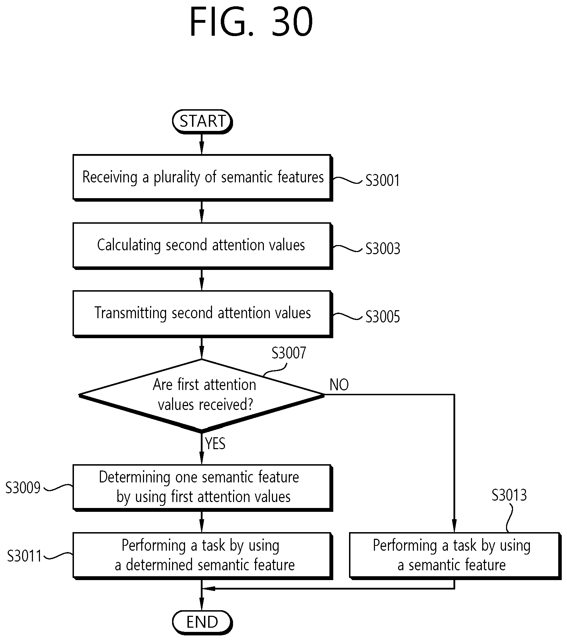

FIG. 30 shows an example of a procedure for performing a task based on a semantic feature, based on an embodiment of the present disclosure. FIG. 30 illustrates a method performed by a UE operating as a destination.

Referring to FIG. 30, in step S3001, the UE receives a plurality of semantic features. For example, the UE receives, from the base station, a plurality of semantic features corresponding to specific source data. Each of the plurality of semantic features may be generated by using each of contextualizing encoders utilizing, as attention, divided partial background knowledge of the base station. A plurality of partial background knowledge used for attention in each of the contextualizing encoders may be at least partially different from each other. For example, first partial background knowledge corresponding to a first contextualizing encoder and second partial background knowledge corresponding to a second contextualizing encoder may have at least one different graph node.

In step S3003, the UE transmits second attention values. The UE may determine the second attention values based on the received plurality of semantic features and background knowledge possessed by the UE, and then may transmit the generated second attention values to the base station. For example, the UE may transmit the second attention values as information used to estimate one, among a plurality of partial background knowledge generated at the base station, that is most similar to background knowledge possessed by the UE. According to an embodiment, the UE may determine the second attention values by performing a multi-head attention mechanism based on the received plurality of semantic features and background knowledge possessed by the UE. And, the UE may transmit the second attention values to the base station as feedback information for the plurality of semantic features received from the base station.

In step S3005, the UE identifies whether first attention values are received from the base station. For example, the first attention values may be received before transmission of the second attention values, or may be received after transmission of the second attention values. According to embodiments, the first attention values are generated during a process of generating a plurality of semantic features at the base station, and may be received together with the plurality of semantic features, or may be received before the UE transmits the second attention values.

When the first attention values are received, in step S3007, the UE determines one semantic feature by using the first attention values. For example, the UE may select, from among the plurality of semantic features received in step S3001, one semantic feature having, as attention, partial background knowledge that is identical to or has a highest similarity to background knowledge possessed by the UE, based on the first attention values and the second attention values. Specifically, the UE may calculate differences between the first attention values and the second attention values, and may select and determine a semantic feature corresponding to an index having a smallest difference value.

**In** step S3009, the UE performs a task by using the determined semantic feature. For example, the UE may perform a downstream task by using one determined semantic feature among the plurality of semantic features.

When the first attention values are not received, in step S3011, the UE performs a task by using a semantic feature received from the base station. For example, after transmitting the second attention values to the base station, the UE may receive at least one semantic feature from the base station. Here, the received semantic feature may be generated based on partial background knowledge estimated, at the base station, to be the same as or to have a highest similarity to background knowledge of the UE among a plurality of partial background knowledge possessed by the base station.

After performing step S3009 or step S3011, the UE may calculate a performance metric according to a result of performing the downstream task. The calculated performance metric may be used at the base station to maintain or fine-tune partial background knowledge estimated to be the same as or to have a highest similarity to background knowledge of the UE. For example, when the UE transmits the performance metric to the base station, the base station may maintain or fine-tune the estimated partial background knowledge based on the performance metric.

In the embodiment described with reference to FIG. 30, the UE performs an operation of identifying whether the first attention values are received. However, whether the first attention values are received may be determined by a pre-defined protocol. In this case, an operation of identifying whether the first attention values are received is not performed, and a procedure may be defined such that step S3007 and step S3009 are performed according to the protocol, or a procedure may be defined such that step S3011 is performed.

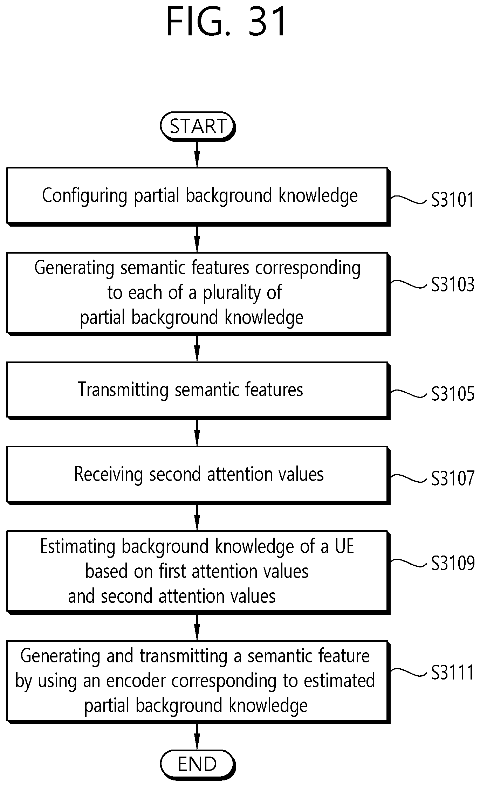

FIG. 31 shows an example of a procedure for estimating background knowledge of a destination, based on an embodiment of the present disclosure. FIG. 31 illustrates signaling between a base station and a UE for a case in which the base station operates as a source and the UE operates as a destination.

Referring to FIG. 31, in step S3101, the base station configures a plurality of partial background knowledge. The base station divides entire background knowledge possessed by the base station into a plurality of partial background knowledge, and configures the divided partial background knowledge as candidates for background knowledge possessed by the UE. For example, when the entire background knowledge possessed by the base station is defined in a graph form, the base station may divide the background knowledge into a plurality of partial background knowledge based on graph clustering.

**In** step S3103, the base station generates semantic features corresponding to each of the plurality of partial background knowledge. For example, the base station generates a plurality of semantic features by performing encoding for source data by using a plurality of encoders utilizing the plurality of partial background knowledge as attention.

**In** step S3105, the base station transmits the semantic features to the UE. For example, the base station transmits a plurality of semantic features for source data to the UE. According to an embodiment, the plurality of semantic features may be sequentially transmitted. According to an embodiment, the base station may transmit, to the UE, first attention values generated in a process of generating the semantic features. However, according to another embodiment, the present step of transmitting the first attention values may be omitted.

In step S3107, the base station receives second attention values from the UE. The second attention values include attention values between the plurality of semantic features and an embedding vector of background knowledge of the UE. The base station receives the second attention values generated at the UE as feedback information for the plurality of semantic features. For example, the base station may receive the second attention values as information used to estimate one, among the plurality of partial background knowledge generated at the base station, that is most similar to background knowledge possessed by the UE.

**In** step S3109, the base station estimates background knowledge of the UE based on the first attention values and the second attention values. For example, the base station selects one partial background knowledge estimated to be identical to or most similar to background knowledge of the UE among the plurality of partial background knowledge configured in step S3101, based on a difference value between the first attention values and the second attention values. Specifically, the base station may calculate, for each index, a difference value between the first attention values and the second attention values, and may estimate partial background knowledge of an encoder corresponding to an index having a smallest difference value as partial background knowledge identical to or most similar to background knowledge of the UE.

In step S3111, the base station generates and transmits a semantic feature by using an encoder corresponding to the estimated partial background knowledge. For example, the base station generates a semantic feature for source data by using an encoder having, as attention, partial background knowledge that is identical to or most similar to background knowledge of the UE among a plurality of partial background knowledge possessed by the base station, and transmits the generated semantic feature to the UE.

After performing step S3101 or step S3111, the base station may receive, from the UE, a performance metric according to a result of performing a downstream task. The base station may maintain or fine-tune the estimated partial background knowledge based on the received performance metric. The base station may perform semantic communication with the UE by generating a semantic feature for source data by using an encoder having, as attention, the fine-tuned partial background knowledge, and transmitting the generated semantic feature to the UE.

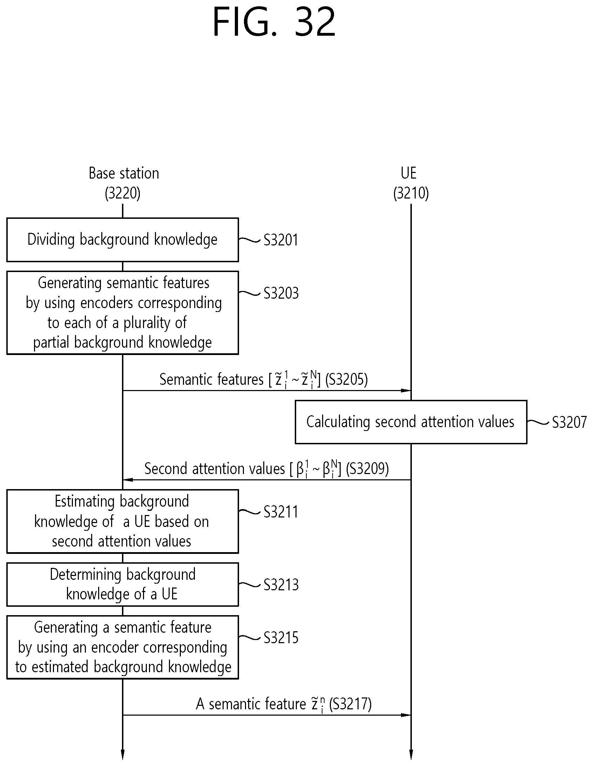

FIG. 32 shows a signaling example for estimating background knowledge of a destination, based on an embodiment of the present disclosure. FIG. 32 illustrates signaling between a base station and a UE in a case in which the base station operates as a source and the UE operates as a destination.

Referring to FIG. 32, in step S3201, the base station 3220 divides background knowledge. For example, the base station 3220 divides background knowledge into a plurality of partial background knowledge based on graph clustering.

In step S3203, the base station 3220 generates semantic features by using encoders corresponding to each of the plurality of partial background knowledge. For example, the base station 3220 generates a plurality of semantic features ${{z}^{˜}}_{i}^{1} ∼ {{z}^{˜}}_{i}^{N}$ for source data by performing encoding for i-th source data by using N encoders utilizing different partial background knowledge as attention.

In step S3205, the base station 3220 transmits a plurality of semantic features ${{z}^{˜}}_{i}^{1} ∼ {{z}^{˜}}_{i}^{N}$ to the UE 3210. Here, the plurality of semantic features ${{z}^{˜}}_{i}^{1} ∼ {{z}^{˜}}_{i}^{N}$ may be sequentially transmitted to the UE 3210.

In step S3207, the UE 3210 calculates second attention values based on the received plurality of semantic features. For example, the UE 3210 calculates second attention values ${β}_{i}^{1} ∼ {β}_{i}^{N}$ by performing a multi-head attention mechanism based on the received plurality of semantic features and background knowledge possessed by the UE 3210.

In step S3209, the UE 3210 transmits second attention values ${β}_{i}^{1} ∼ {β}_{i}^{N}$ to the base station. For example, the UE 3210 may transmit the second attention values ${β}_{i}^{1} ∼ {β}_{i}^{N}$ to the base station as feedback information for the plurality of semantic features ${{z}^{˜}}_{i}^{1} ∼ {{z}^{˜}}_{i}^{N}$ received from the base station 3220.

In step S3211, the base station 3220 estimates background knowledge of the UE based on the second attention values. First attention values ${α}_{i}^{1} ∼ {α}_{i}^{N}$ generated in a process of generating the plurality of semantic features ${{z}^{˜}}_{i}^{1} ∼ {{z}^{˜}}_{i}^{N}$ may be further used for estimating background knowledge of the UE 3210. For example, the base station 3220 calculates, for each index, a difference between a first attention value and a second attention value of the first attention values ${α}_{i}^{1} ∼ {α}_{i}^{N}$ and the second attention values ${β}_{i}^{1} ∼ {β}_{i}^{N}$*,* selects an encoder corresponding to an index having a smallest calculated difference value, and may estimate partial background knowledge utilized as attention of the selected encoder as partial background knowledge that is identical to or most similar to background knowledge of the UE 3210.

In step S2313, the base station 3320 determines the estimated partial background knowledge as background knowledge of the UE. For example, the base station 3320 determines, as background knowledge of the UE 3310, partial background knowledge that is identical to or similar to background knowledge of the UE 3310 among a plurality of partial background knowledge possessed by the base station 3320, and may thereafter utilize the corresponding partial background knowledge for semantic communication with the UE 3310.

In step S3215, the base station 3220 generates a semantic feature by using an encoder corresponding to background knowledge of the UE. For example, the base station 3220 may generate a semantic feature ${{z}^{˜}}_{i}^{n}$ by performing encoding for source data by using an encoder having, as attention, specific partial background knowledge estimated to be identical to or most similar to background knowledge of the UE among the plurality of partial background knowledge of the base station. Here, ${{z}^{˜}}_{i}^{n}$ means a semantic feature obtained by encoding i-th source data with an n-th encoder.

In step S3217, the base station 3220 transmits a semantic feature ${{z}^{˜}}_{i}^{n}$ to the UE 3210. This is for allowing the UE 3210 to perform a downstream task by using the semantic feature ${{z}^{˜}}_{i}^{n}$. By transmitting, to the UE 3210, a semantic feature ${{z}^{˜}}_{i}^{n}$ generated by an encoder having, as attention, partial background knowledge identical to or most similar to background knowledge possessed by the UE 3210, the base station 3220 may guarantee performance of a downstream task of the UE 3210 to be greater than or equal to a certain level.

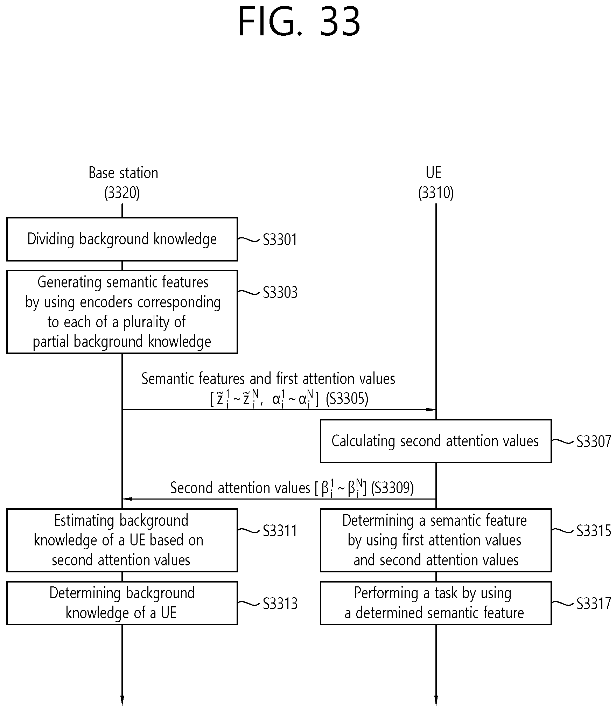

FIG. 33 shows a signaling example for estimating background knowledge of a destination, based on an embodiment of the present disclosure. FIG. 33 illustrates signaling between a base station and a UE in a case in which the base station operates as a source and the UE operates as a destination.

Referring to FIG. 33, in step S3301, the base station 3320 divides background knowledge. For example, the base station 3320 divides background knowledge into a plurality of partial background knowledge based on graph clustering.

In step S3303, the base station 3320 generates semantic features by using encoders corresponding to each of the plurality of partial background knowledge. For example, the base station 3320 generates a plurality of semantic features ${{z}^{˜}}_{i}^{1} ∼ {{z}^{˜}}_{i}^{N}$ for source data by performing encoding for i-th source data by using N encoders utilizing different partial background knowledge as attention.

In step S3305, the base station 3320 transmits a plurality of semantic features ${{z}^{˜}}_{i}^{1} ∼ {{z}^{˜}}_{i}^{N}$ and first attention values ${α}_{i}^{1} ∼ {α}_{i}^{N}$ to the UE 3310. Here, the plurality of semantic features ${{z}^{˜}}_{i}^{1} ∼ {{z}^{˜}}_{i}^{N}$ and/or the first attention values ${α}_{i}^{1} ∼ {α}_{i}^{N}$ may be sequentially transmitted to the UE 3310. The first attention values may be generated in a process of generating the plurality of semantic features ${{z}^{˜}}_{i}^{1} ∼ {{z}^{˜}}_{i}^{N}$*.*

In step S3307, the UE 3310 calculates second attention values based on the received plurality of semantic features. For example, the UE 3310 calculates second attention values ${β}_{i}^{1} ∼ {β}_{i}^{N}$ by performing a multi-head attention mechanism based on the received plurality of semantic features and background knowledge possessed by the UE 3310.

In step S3309, the UE 3310 transmits second attention values ${β}_{i}^{1} ∼ {β}_{i}^{N}$ to the base station. For example, the UE 3310 may transmit the second attention values ${β}_{i}^{1} ∼ {β}_{i}^{N}$ to the base station as feedback information for the plurality of semantic features ${{z}^{˜}}_{i}^{1} ∼ {{z}^{˜}}_{i}^{N}$ received from the base station 3320.

In step S3311, the base station 3320 estimates background knowledge of the UE based on the first attention values and the second attention values. The first attention values ${α}_{i}^{1} ∼ {α}_{i}^{N}$ may be generated in a process of generating the plurality of semantic features ${{z}^{˜}}_{i}^{1} ∼ {{z}^{˜}}_{i}^{N}$*.* For example, the base station 3320 calculates, for each index, a difference between a first attention value and a second attention value of the first attention values ${α}_{i}^{1} ∼ {α}_{i}^{N}$ and the second attention values ${β}_{i}^{1} ∼ {β}_{i}^{N}$, selects an encoder corresponding to an index having a smallest calculated difference value, and may estimate partial background knowledge utilized as attention of the selected encoder as partial background knowledge that is identical to or most similar to background knowledge of the UE 3310.

In step S3313, the base station 3320 determines the estimated partial background knowledge as background knowledge of the UE. For example, the base station 3320 determines, as background knowledge of the UE 3310, partial background knowledge that is identical to or similar to background knowledge of the UE 3310 among a plurality of partial background knowledge possessed by the base station #320, and may thereafter utilize the corresponding partial background knowledge for semantic communication with the UE 3310.

In step S3315, the UE 3310 determines a semantic feature by using the first attention values and the second attention values. For example, the UE 3310 calculates, for each index, a difference between a first attention value and a second attention value of the first attention values ${α}_{i}^{1} ∼ {α}_{i}^{N}$ and the second attention values ${β}_{i}^{1} ∼ {β}_{i}^{N}$*,* and selects a semantic feature corresponding to an index having a smallest calculated difference value. The selected semantic feature may be treated as having been generated by an encoder, among a plurality of encoders of the base station 3320, that utilizes, as attention, partial background knowledge identical to or most similar to background knowledge of the UE 3310. Here, step S3315 may be performed after step S3309, or at substantially a same time as step S3309. For example, step S3315 may be performed before step S3309 or step S3311, or may be performed simultaneously with or after step S3311 and step S3313.

In step S3317, the UE 3310 performs a task by using the determined semantic feature. For example, the UE 3310 may perform a downstream task by using, among a plurality of semantic features received from the base station 3320, a semantic feature generated by an encoder utilizing, as attention, partial background knowledge identical to or most similar to background knowledge of the UE 3310.

In the description with reference to FIG. 32 and FIG. 33, the UE may calculate a performance metric according to a result of performing a downstream task, and may report the calculated performance metric to the base station. This is to allow the base station to maintain or fine-tune estimated partial background knowledge based on the received performance metric. For example, the base station may fine-tune background knowledge of the UE estimated at the base station based on the performance metric.

In the present disclosure described above, it has been assumed that a base station operates as a source and a UE operates as a destination. However, embodiments of the present disclosure are not limited thereto. For example, a UE may operate as a source, and another UE to communicate with the corresponding UE may operate as a destination. Alternatively, a UE may operate as a source, and a base station may operate as a destination.

It is evident that the examples of the proposed methods described above may also be included as implementation methods of the present disclosure and may be regarded as types of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

### INDUSTRIAL AVAILABILITY

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method performed by a user equipment (UE) in a wireless communication system, the method comprising:
receiving, from a base station, configuration information related to communication;
receiving, from the base station, control information;
based on the configuration information and the control information, receiving, from the base station, a data signal; and
transmitting, to the base station, feedback information for the data signal,
wherein the data signal includes a plurality of semantic features generated based on a plurality of partial background knowledge derived from background knowledge information of the base station, and
wherein the feedback information includes information used to estimate one that is most similar to background knowledge that the UE has, from among the plurality of partial background knowledge.

2. The method of claim 1,
wherein the plurality of semantic features are generated by a plurality of encoders encoding source data using the plurality of partial background knowledge as attention, and
wherein the plurality of partial background knowledge used in each of the plurality of encoders is at least partially different from each other.

3. The method of claim 1,
wherein the information used to estimate the one that is most similar to the background knowledge that the UE has, from among the plurality of partial background knowledge includes attention values between the background knowledge that the UE has and the plurality of semantic features.

4. The method of claim 3, further comprising:
receiving, from the base station, attention values related to the generated plurality of semantic features;
based on a difference between the received attention values and the attention values between the background knowledge that the UE has and the plurality of semantic features, selecting one semantic feature among the plurality of semantic features; and
performing a downstream task using the selected semantic feature.

5. The method of claim 4, further comprising:
transmitting, to the base station, a performance metric for a result of performing the downstream task.

6. A method performed by a base station in a wireless communication system, the method comprising:
transmitting, to a user equipment (UE), configuration information related to communication;
transmitting, to the UE, control information;
based on the configuration information and the control information, transmitting, to the UE, a data signal; and
receiving, from the UE, feedback information for the data signal,
wherein the data signal includes a plurality of semantic features generated based on a plurality of partial background knowledge derived from background knowledge information of the base station, and
wherein the feedback information includes information used to estimate one that is most similar to background knowledge that the UE has, from among the plurality of partial background knowledge.

7. The method of claim 6, further comprising:
based on graph clustering, dividing the background knowledge information of the base station into the plurality of partial background knowledge.

8. The method of claim 6,
wherein the information used to estimate the one that is most similar to the background knowledge that the UE has includes attention values between the background knowledge that the UE has and the plurality of semantic features,
the method further comprises:
based on a difference between attention values obtained based on the generating the plurality of semantic features and the attention values between the background knowledge that the UE has and the plurality of semantic features, estimating the one that is most similar to the background knowledge that the UE has, from among the plurality of partial background knowledge.

9. The method of claim 8, further comprising:
based on the one that is most similar to the background knowledge that the UE has, generating one semantic feature for source data; and
transmitting, to the UE, the generated one semantic feature.

10. The method of claim 8, further comprising:
receiving, from the UE, a performance metric for a result of performing a downstream task; and
based on the performance metric, fine-tuning the estimated one that is most similar to the background knowledge that the UE has.

11. A user equipment (UE) in a wireless communication system, the UE comprising:
a transceiver; and
a processor connected to the transceiver,
wherein the processor is configured to control the UE to perform operations comprising:
receiving, from a base station, configuration information related to communication;
receiving, from the base station, control information;
based on the configuration information and the control information, receiving, from the base station, a data signal; and
transmitting, to the base station, feedback information for the data signal,
wherein the data signal includes a plurality of semantic features generated based on a plurality of partial background knowledge derived from background knowledge information of the base station, and
wherein the feedback information includes information used to estimate one that is most similar to background knowledge that the UE has, from among the plurality of partial background knowledge.

12. A base station in a wireless communication system, the base station comprising:
a transceiver; and
a processor connected to the transceiver,
wherein the processor is configured to control the base station to perform operations comprising:
transmitting, to a user equipment (UE), configuration information related to communication;
transmitting, to the UE, control information;
based on the configuration information and the control information, transmitting, to the UE, a data signal; and
receiving, from the UE, feedback information for the data signal,
wherein the data signal includes a plurality of semantic features generated based on a plurality of partial background knowledge derived from background knowledge information of the base station, and
wherein the feedback information includes information used to estimate one that is most similar to background knowledge that the UE has, from among the plurality of partial background knowledge.

13. A communication device, comprising:
at least one processor;
at least one computer memory connected to the at least one processor and storing instructions that, based on being executed by the at least one processor, cause the communication device to perform operations,
wherein the operations comprise:
receiving, from a base station, configuration information related to communication;
receiving, from the base station, control information;
based on the configuration information and the control information, receiving, from the base station, a data signal; and transmitting, to the base station, feedback information for the data signal,
wherein the data signal includes a plurality of semantic features generated based on a plurality of partial background knowledge derived from background knowledge information of the base station, and
wherein the feedback information includes information used to estimate one that is most similar to background knowledge that the UE has, from among the plurality of partial background knowledge.

14. A non-transitory computer-readable medium storing at least one instruction, the non-transitory computer-readable medium comprising:
the at least one instruction being executable by a processor,
wherein the at least one instruction is configured to control a device to perform operations comprising:
receiving, from a base station, configuration information related to communication;
receiving, from the base station, control information;
based on the configuration information and the control information, receiving, from the base station, a data signal; and
transmitting, to the base station, feedback information for the data signal,
wherein the data signal includes a plurality of semantic features generated based on a plurality of partial background knowledge derived from background knowledge information of the base station, and
wherein the feedback information includes information used to estimate one that is most similar to background knowledge that the UE has, from among the plurality of partial background knowledge.
